(19)

Europäisches
Patentamt
European
Patent Office
Office européen
des brevets

(11) **EP 2 869 248 A1**

(12) **EUROPEAN PATENT APPLICATION**
published in accordance with Art. 153(4) EPC

(43) Date of publication:
**06.05.2015 Bulletin 2015/19**

(21) Application number: **13808980.0**

(22) Date of filing: **25.06.2013**

(51) Int Cl.:
***G06Q 10/04*** *(2012.01)*

(86) International application number:
**PCT/JP2013/067311**

(87) International publication number:
**WO 2014/002974 (03.01.2014 Gazette 2014/01)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **27.06.2012 JP 2012144414**

(71) Applicant: **Yanmar Co., Ltd.**
**Osaka-shi, Osaka 530-8311 (JP)**

(72) Inventor: **NAGAKURA, Katsuhiko**
**Osaka-shi**
**Osaka 530-0014 (JP)**

(74) Representative: **Thibon, Laurent**
**Cabinet Beaumont**
**1, rue Champollion**
**38000 Grenoble (FR)**

(54) **PREDICTION DEVICE, PREDICTION METHOD, AND COMPUTER PROGRAMME**

(57) Provided are a prediction device, a prediction method, and a computer program, which related to prediction method using T method, and which reflect, in addition to a time difference model, trends in changes over time, thus further improving prediction accuracy.

For example, the prediction device determines, from signal values stored in a time series and data for each item, whether or not the signal trend of the signal values has periodicity, and if the signal trend has not periodicity, then a signal period is selected on the basis of the most recent signal trend and the MD trend for each item, and T method is used on the data for each item and the signal values in the selected signal period, and prediction is carried out.

FIG. 15

EP 2 869 248 A1

**Description**

**Technical Field**

The present invention relates to a method for analyzing an object to be predicted that varies chronologically as well as a plurality of items regarding the object to be predicted and, in particular, to a prediction device, a prediction method, and a computer program for allowing a computer to function as a prediction device wherein the precision of the predictive results can be improved.

**Background Art**

Economic prediction such as the prediction of the demand for products and the prediction of amount of sales are extremely important in order to investigate management direction and company strategy. In addition, how the predicted demand is connected to the plan of each company department, such as the sales, inventory, production, distribution, and development departments, has become an issue that management must consider. Furthermore, prediction of the following events using the information that has been gained up to the present, not only regarding the prediction of the economic events such as the prediction of demand and the amount of sales but also other events that chronologically vary is an important issue in various fields.

Various types of chronological analysis methods have been proposed as methods for predicting subsequent changes in events that chronologically occur, such as the demand in the number of products and the number of products that have been sold. As examples of such an analytical method, multivariate analyses such as multiple regression analysis and the T method can be cited (see Patent Document 1 and Non-Patent Document 1). Moreover, various ideas of application for these analytical methods have been proposed (see Non-Patent Document 2).

Citation List

Patent Literature

Patent Document 1: Japanese Patent No. 3141164

Non-Patent Literature

Non-Patent Document 1: MT System for Beginners, by Kazuo Tatebayashi, Shoichi Tejima, and Yoshiko Hasegawa, edited by Kazuo Tatebayashi, Nikkagiren Publishing Co. Ltd., December 2008.
Non-Patent Document 2: Study of T-Method to mitigate NonLinear Phenomena, by Yukiya Masuda, 17th Conference of Quality Engineering Studies, Article Collection pp. 422-425, 2009.

**Summary of Invention**

Technical Problem

In the case of an analysis using the T method from among various types of chronological methods, how an item used for analysis is selected has been a problem. As for the selection of an item, a technique disclosed in Non-Patent Document 1 and referred to as a two-sided T method has been proposed. However, the present inventor found that the precision of the prediction when an item is selected using the two-sided T method was insufficient and examined a method for selecting an item wherein the estimated comprehensive SN ratio becomes the maximum in Non-Patent Document 2. As a result, the present inventor learned that the object period during which an item is to be selected should be selected taking the trend of the chronological change of past events into consideration.

The present invention is provided on the basis of what has been thus learned, and an object thereof is to provide a prediction device, a prediction method, and a computer program for further increasing the precision of prediction by taking into account the trend of chronological change.

Technical Solution

The prediction device according to the present invention is provided with: a recording means for chronologically recording values relating to an event with which a plurality of factors are associated and the plurality of factors associated with the values as data for each of a plurality of items by associating the data with the values; and an operation means for operating based on a value and a piece of data for an item read out from values and data recorded in the recording means, the piece of data being corresponding to the value, wherein the operation means selects a portion of items from the plurality of items on the basis of a factorial effect value indicating the strength of a correlation between the plurality of items and changes of the value, and predicts a value relating to the event during an object period to be predicted on the basis of the data of the selected portion of items, and is characterized in that the operation means comprises: a determination means for determining presence or absence of a periodicity in a trend of chronological change of the value during a recording period for the value recorded in the recording means; a selection means for selecting a period, within the recording period, having a same trend as the trend of chronological change of the value during a corresponding period earlier than the object period to be predicted by a predetermined period if the determination means determines that a periodicity is absent; a period discrimination means for discriminating a period, from the period selected by the selection means, a period to which the data for the plurality of items during the corresponding period belongs; an item selection means for selecting a plurality of items on the basis of a factorial effect value derived from data for the plurality of items during the discriminated period and the value corresponding to a period later than the discriminated period by a predetermined period; and a prediction means for calculating a prediction value during the object period to be predicted on the basis of data for the items selected by the item selection means during the corresponding period.

The prediction device according to the present invention is characterized in that the determination means is provided with: a means for calculating an autocorrelation coefficient for each period by changing the period for the values recorded chronologically; and a means for determining presence or absence of a peak in a distribution of the autocorrelation coefficient calculated for each period, and the determination means is configured to determine that a periodicity is present if it is determined a peak is present.

The prediction device according to the present invention is characterized in that period discrimination means is provided with: a first calculation means for calculating Mahalanobis's generalized distance of data for the plurality of items during the period selected by the selection means; and a second calculation means for calculating a trend of the calculated Mahalanobis's generalized distance on the basis of a trend model, and the period discrimination means is configured to discriminate a period having a same trend as a trend of data for the plurality of items during the corresponding period, within the period selected by the selection means, as the period to which the data for the plurality of items during the corresponding period belongs.

The prediction method according to the present invention uses a device that is provided with: a recording means for chronologically recording values relating to an event with which a plurality of factors are associated and the plurality of factors associated with the values as data for each of a plurality of items by associating the data with the values; and an operation means for operating based on a value and a piece of data for an item read out from values and data recorded in the recording means, the piece of data being corresponding to the value, wherein the operation means selects a portion of items from the plurality of items on the basis of a factorial effect value indicating the strength of a correlation between the plurality of items and changes of the value and predicts a value relating to the event during an object period to be predicted on the basis of the data of the selected portion of items, and is characterized in that the operation means: determines presence or absence of a periodicity in a trend of chronological change of the value during a recording period for the value recorded in the recording means; selects a period, within the recording period, the period having a same trend as the trend of chronological change of the value during a corresponding period earlier than the object period to be predicted by a predetermined period when it is determined that a periodicity is absent; discriminates a period, from the selected period, a period to which the data for the plurality of items during the corresponding period belongs; selects a plurality of items on the basis of a factorial effect value derived from data for the plurality of items during the discriminated period and the value corresponding to a period that is a predetermined period later from the discriminated period; and calculates a prediction value during the object period to be predicted on the basis of data for the selected items during the corresponding period.

The computer program according to the present invention allows a computer, having a recording means, to read out values chronologically recorded in the recording means the values being relating to an event with which a plurality of factors are associated and data for each of a plurality of items recorded in the recording means as a plurality of factors associated with the values; to select a portion of items from the plurality of items on the basis of a factorial effect value indicating the strength of a correlation between the plurality of items and changes of the value; and to predict a value relating to the event during an object period to be predicted on the basis of the data of the selected portion of items, and is characterized by causing the computer to execute the functions of: a determination means for determining presence or absence of a periodicity in a trend of chronological change of the value during a recording period for the value recorded in the recording means; a selection means for selecting a period, within the recording period, the period having a same trend as the trend of chronological change of the value during a corresponding period earlier than the object period to be predicted by a predetermined period when the determination means determined there a periodicity is absent; a period discrimination means for discriminating a period, from the selected period by the selection means, the period to which the data for the plurality of items during the corresponding period belongs; an item selection means for selecting a plurality of items on the basis of a factorial effect value derived from data for the plurality of items during the discriminated period and the value corresponding to a period later than the the discriminated period by a predetermined period; and a prediction means for calculating a prediction value during the object period to be predicted on the basis of data for the items selected by the item selecting means during the corresponding period.

According to the present invention, a value and data for each item are read out from a recording means in which values on the events that are chronological data and data for a plurality of items that are a plurality of factors regarding the values such that it is determined whether presence or absence of a periodicity in the trend of chronological change of the values of the chronological data. In the case wherein it has been determined that a periodicity is absent, the value directly before the object period to be predicted and the period having the same trend in change as the trend in the chronological change of data for each item are selected from the recording period, and a prediction is performed on the basis of the relational expression between the data on each item during the selected period and the value after a predetermined period of time.

According to the present invention, it is determined whether presence or absence of a periodicity in the trend of the chronological change in values on the basis of the existence of a peak in the distribution of the autocorrelation coefficient. It is determined whether presence or absence of a periodicity by changing the period of time and, therefore, it can be objectively determined whether presence or absence of a periodicity that is not fixed by season or the like and, thus, it is possible to improve the precision of the prediction.

According to the present invention, periods having the same trend of chronological change can be determined using the Mahalanobis's generalized distance. As a result, it is possible to select a period that is objectively similar in accordance with a relatively easy technique, and thus, it becomes possible to increase the precision of prediction.

Advantageous Effects

According to the present invention, a relational equation between an item and a signal value after a predetermined period of time is specified by selecting an item from the signal period during which it is determined that the trend of change is similar with a trend of change of the signal value and each data on the item at the point in time of prediction when an item to be used for analysis is selected such that prediction is made from the relational equation. That is to say, prediction is performed on the basis of the data during the period if there is a chronological change having a high similarity among past events. As a result, the effects of the chronological data having a chronological change of which the trend is different from a trend at the point in time of prediction are eliminated and, thus, precision of prediction can be increased.

**Brief Description of Drawings**

Fig 1 is a table illustrating examples of data contents including signal values and items used in the T method;
Fig 2 is a table illustrating examples of a proportionality constant $\beta$ and an SN ratio $\eta$ (duplicate ratio) of each item used in the T method;
Fig 3 is a table showing an actual signal value or a standardized real signal value of each member as well as a comprehensive estimated value found for each member in a list form;
Fig 4 is a graph of factor effects showing the SN ratio of the comprehensive estimated value for each item in the T method;
Fig 5 is a graph showing the effects on factor effects for each item in the T method;
Fig 6 is a schematic diagram illustrating a time difference model;
Fig 7 is a graph showing the relationship between the signal value and the data value for each item before and after a conversion process;
Fig 8 is a graph schematically showing the process for determining the optimal number of items to be selected;
Fig 9 is a graph showing the correspondence between the number of items to be selected and the SN ratio of the comprehensive estimated value;
Fig 10 is a block diagram showing the structure of the prediction device according to the present embodiment;
Fig 11 is a flow chart showing an example of the procedure for the predictive process in the prediction device according to the present embodiment;
Fig 12 is a flow chart showing an example of the procedure for the signal period selection process;
Fig 13 is a diagram illustrating the contents of the items in the present examples;
Fig 14 is a graph showing the examples of the contents of signal values used for the prediction in Example 1;
Fig 15 is a graph showing the signal value and signal trend in Example 1;
Fig 16 is a graph showing an example of plots of the sample autocorrelation function wherein it is determined that a periodicity is present;
Fig 17 is a graph showing an example of plots of the sample autocorrelation function wherein it is determined that a periodicity is absent;
Fig 18 is a graph showing an example of a signal period in a minus trend selected from the signal values in Fig 15;
Fig 19 is a graph showing the MD of item data and the MD trend in the signal period selected in Example 1;
Fig 20 is a graph showing the prediction results from the control section in the prediction device in Example 1;
Fig 21 is a table showing the examples of the contents of signal values used for the prediction in Example 2;
Fig 22 is a graph showing the signal value and signal trend in Example 2;
Fig 23 is a graph showing an example of a signal period in a plus trend selected from the signal values in Fig 22;
Fig 24 is a graph showing the MD of item data and the MD trend in the signal period selected in Example 2; and
Fig 25 is a graph showing the prediction results from the control section in the prediction device in Example 2.

Description of Embodiments

In the following, the embodiments of the present invention are specifically described in reference to the drawings.

In the predictive method disclosed below, the invention of the "time difference model" is added to the conventional MT system that has been used, in particular to the basic method using the T method in order to predict the chronological change in the signal (value concerning an event) and, thus, the precision of the prediction is improved. Furthermore, a "method for selecting an appropriate signal and item" used for prediction is added from a past signal and the item corresponding to the past signal (factor) such that the precision of the prediction is improved. Here, the following predictive method is implemented by means of an operation means such as a computer (below-described prediction device 1) wherein each piece of data can be read out from a recording means in which data to be used for prediction is recorded.

In the following, a "method for selecting a signal and an item" is particularly disclosed. Here, the technologies that are already disclosed in the above, such as the T method and the time difference model, are technologies and inventions on which the selection method is assumed and, thus, are necessary to make the understanding of the method for selecting a signal and an item according to the present invention easier and, therefore, are described in the following.

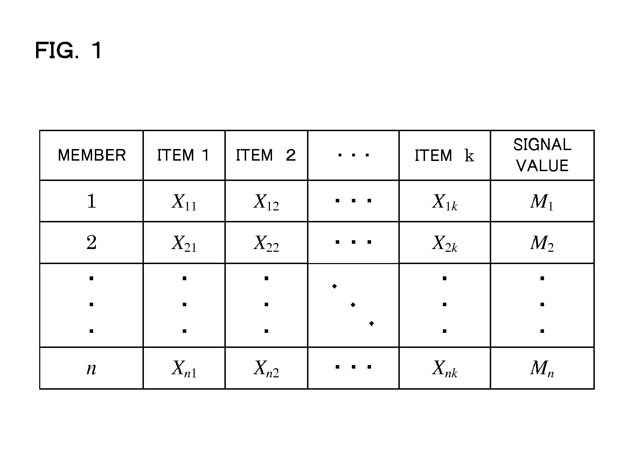

First, the T method is outlined. Fig 1 is a table showing examples of data contents of a signal value and an item used in the T method. In Fig 1, members are indices showing data for each unit period and are denoted as 1, 2, ... , n. The data values themselves are recorded as signal values M. "item 1," "item 2"..."item k" are items that become factors associated with the signal values M. $X_{11}$, $X_{12}$, ... , $X_{1k}$ are denoted as the data of each item associated with the signal value $M_1$ of member 1. In the case wherein a member is an amount of electricity usage for each month, for example, the amount of electricity usage (W) for each month is the signal value M and the items are variables that are likely associated with the fluctuation in the amount of electricity usage, such as "month", "air temperature", "wind velocity", "precipitation amount (monthly average)", "hours of sunlight (monthly average)", "highest air temperature (monthly average)", and "lowest air temperature (monthly average)". In this case, the data of items is the data of the value for each item, for example which month it is, the monthly average value of the air temperature, the monthly average value of the wind velocity, and the like.

Though actual values may be used for the signal value M and the data X of each item, it is preferable to use the actual values after they have been standardized using an operation means. An example of the method for standardization is a method according to which an operation means subtracts the average value of the data of each item (average value of the air temperature that is the monthly average of all of the members to be used) from the data X of each item (average monthly air temperature, for example). As a result, it becomes possible to express the predictive expression as a straight line that passes through the original point in the case wherein data values of the items are plotted in correspondence with the signal values (referred to as unit space).

In accordance with the predictive method, a specific equation for specifying the relationship between the signal value M of each member and the data of articles that are associated multivariables is found by means of an operation means, data of an item that is an object to be predicted in the next unit period is predicted and the data of the predicted item is applied to the specific expression for a prediction. However, the data of items is multivariate. There is a case wherein there are 12 members and the number of items is 20 (k = 20), for example. In this case, it is difficult to find a specific equation to predict the next signal value. According to the T method, a value indicating the intensity of the factor effect for the fluctuation of the signal value is evaluated for each of a great number of items and a weight is placed on the value indicating the factor effect. As a result, effective items can be selected in order to make a prediction with a sufficiently high precision only by using the selected items without using data of all of the items.

Therefore, in accordance with the T method, the operation means calculates the proportionality constant $\beta$ and the SN ratio $\eta$ (duplicate ratio) for each item by applying Formulas 1 and 2 in the following using the members having the signal value M. The SN ratio is a value denoted by using an inverse number of the dispersion shown in Formula 2 in the following and is the sensitivity to signal value for each item, which shows the strength of the correlation between each item and the signal value.

[Mathematical Expression 1]
a proportionality constant

$$\beta_1 = \frac{M_1 X_{11} + M_2 X_{21} + \cdots + M_n X_{n1}}{r} \qquad \cdots \text{Formula 1}$$

an SN ratio

$$\eta_1 = \begin{cases} \dfrac{\dfrac{1}{r}\left(S_{\beta 1} - V_{e1}\right)}{V_{e1}} & \left(\text{If } S_{\beta 1} > V_{e1}\right) \\[2em] 0 & \left(\text{If } S_{\beta 1} \le V_{e1}\right) \end{cases} \qquad \cdots \text{Formula 2}$$

where effective number of replications

$$r = M_1^2 + M_2^2 + \cdots + M_n^2$$

total variation
$$S_{T1} = X_{11}^2 + X_{21}^2 + \cdots + X_{n1}^2$$

variation of the proportional $\quad S_{\beta 1} = \dfrac{\left(M_1 X_{11} + M_2 X_{21} + \cdots + M_n X_{n1}\right)^2}{r}$

error variation
$$S_{e1} = S_{T1} - S_{\beta 1}$$

error variance $\quad V_{e1} = \dfrac{S_{e1}}{n-1}$

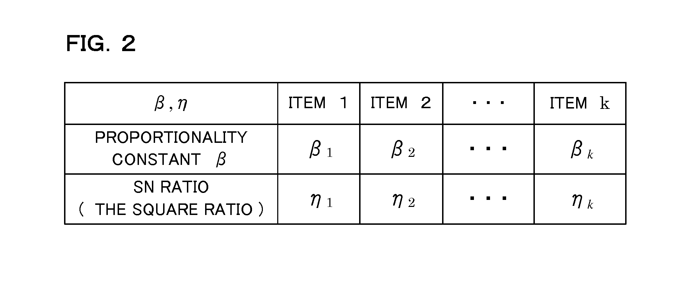

Here, the above formulas 1 and 2 are equations for calculating the proportionality constant β and the SN ratio η (duplicate ratio) for item 1. The operation means carries out the same calculation on items 2 through k as on item 1. Fig 2 is a table illustrating an example of the proportionality constant β and the SN ratio η (duplicate ratio) for each item used in the T method. In Fig 2 the proportionality constant β and the SN ratio η (duplicate ratio) for each item that has been calculated by applying the above describe formulas 1 and 2 to each item are shown in a table form.

Next, the proportionality constant β and the SN ratio η (duplicate ratio) for each item are used in order for the operation means to calculate an estimated value of the output for each item of each member. The estimated value of the output for item 1 can be shown in Formula 3 in the following for the ith member. Likewise, the operation means calculates the estimated values of the output for items 2 through k.

[Mathematical Expression 2]

$$\hat{M}_{i1} = \frac{X_{i1}}{\beta_1} \qquad \cdots \text{ Formula 3}$$

As a result, the operation means can derive a comprehensive estimation equation (Formula 4) as a predictive formula showing the relationship between the data on an item and the comprehensive estimated value of a signal value. Here, the comprehensive estimation equation using all of the items (1 through k) does not necessarily have the highest precision of prediction for the signal values of the object to be predicted. Therefore, the operation means selects an appropriate combination of items from among all of the items in order to increase the contribution to the effects on the object to be predicted and to increase the precision of the prediction.

Thus, the operation means calculates the comprehensive estimated value using the SN ratios $n_1$, $\eta_2$, ... , $n_k$ (duplicate ratio) that indicate the precision of the estimations concerning the estimated value for each item as weighted coefficients. Accordingly, the comprehensive estimated value of the ith member can be represented in Formula 4 in the following.

[Mathematical Expression 3]
a comprehensive estimated value

$$\hat{M}_i = \frac{\eta_1 \times \dfrac{X_{i1}}{\beta_1} + \eta_2 \times \dfrac{X_{i2}}{\beta_2} + \cdots + \eta_k \times \dfrac{X_{ik}}{\beta_k}}{\eta_1 + \eta_2 + \cdots + \eta_k} \quad (i = 1, 2, \cdots, n) \quad \cdots \text{Formula 4}$$

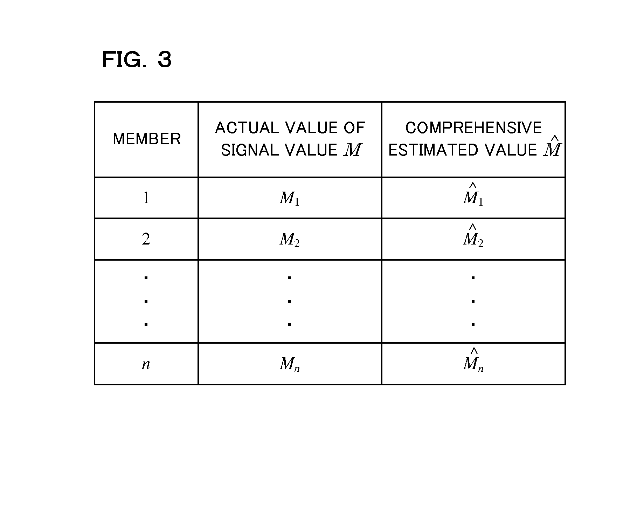

Fig 3 is a table showing an actual signal value or a standardized real signal value of each member as well as a comprehensive estimated value found for each member in a list form. Thus, the actual value of each member and the comprehensive estimated value that have been gained as in Fig 3 are used for the operation means to calculate the SN ratio η (db) for each item using Formula 5 in the following.

[Mathematical Expression 4]
the SN ratio of the comprehensive estimated value

$$\eta = 10 \log \left( \frac{\dfrac{1}{r}\left(S_\beta - V_e\right)}{V_e} \right) (db) \quad \cdots \quad \text{Formula 5}$$

where
linear function $L = M_1\hat{M}_1 + M_2\hat{M}_2 + \cdots + M_n\hat{M}_n$

effective number of replications $r = M_1^2 + M_2^2 + \cdots + M_n^2$

total variation $S_T = \hat{M}_1^2 + \hat{M}_2^2 + \cdots + \hat{M}_n^2$ $(f = n)$

variation of the proportional $\quad S_\beta = \dfrac{L^2}{r} \quad (f = 1)$

error variation $S_e = S_T - S_\beta$ $(f = n\text{-}1)$

error variance $\quad V_e = \dfrac{S_e}{n-1}$

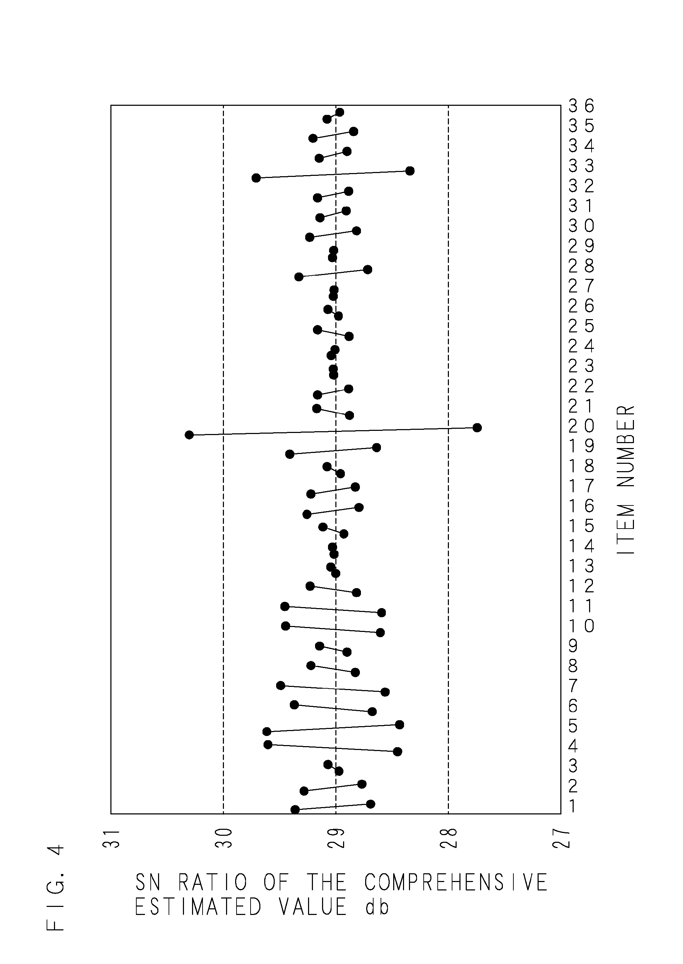

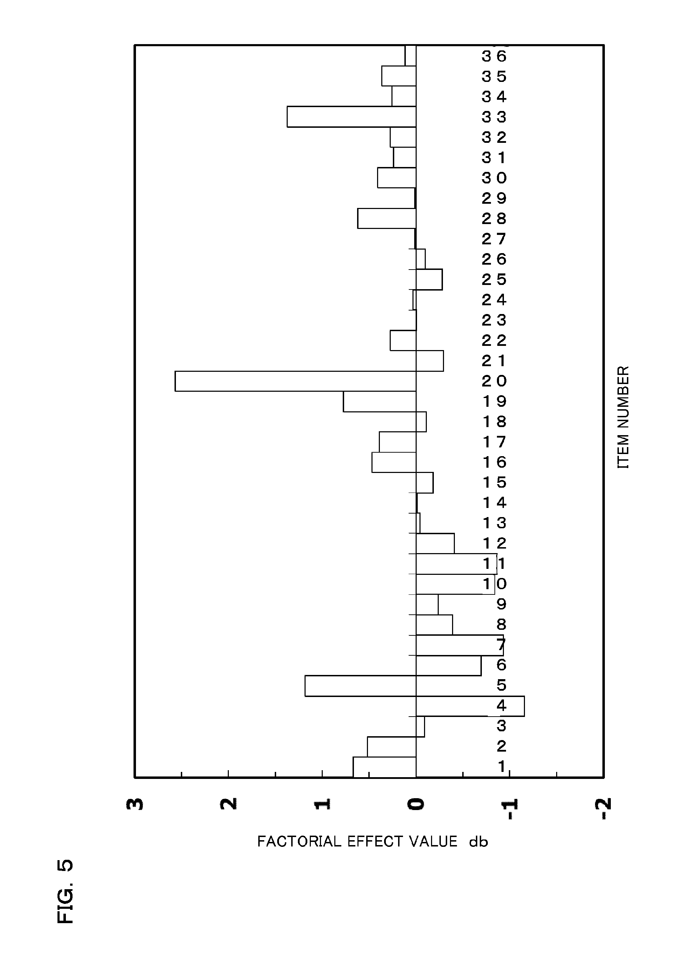

In accordance with the T method, the comprehensive estimated value for each item that has been found as described above is used to further calculate a value that is referred to as a factorial effect value and, thus, an item is selected on the basis of the factorial effect value. Fig 4 is a graph of the factor effects showing the SN ratio of the comprehensive estimated value for each item in accordance with the T method. Fig 5 is a graph showing the effects on factor effects for each item in the T method.

In Fig 4 the lateral axis indicates items that become objects to be selected and the longitudinal axis indicates the SN ratio of the comprehensive estimated value and, thus, Fig 4 shows the SN ratio for each item. In Fig 4, the left side of each item shows the SN ratio of the comprehensive estimated value for each piece of data including the data on the item, that is to say, the strength of the correlation vis-à-vis the signal value, and the right side shows the SN ratio of the comprehensive estimated value for each piece of data excluding the data on the item. The example in Fig 4 has 36 items and, thus, there are $2^{36\text{-}1}$ combinations of selections. The operation means derives the SN ratio of the object to be predicted for one or a plurality of items in each of these combinations. In addition, the operation means calculates the average value of the SN ratios in a combination that includes the items to become the objects and the average value of the SN ratios in a combination that does not include these items. For each item Fig 4 shows on the left side the average value of the SN ratio that includes the data of the items that has been thus calculated and on the right side the average value of the SN ratio that does not include the items.

In Fig 5, the lateral axis indicates items to become objects to be selected and the longitudinal axis indicates the factorial effect values and, thus, Fig 5 shows the degree of the factorial effect value for each item. A factorial effect value along the longitudinal axis in Fig 5 indicates the degree of the SN ratio on the left side (including items) relative to the SN ratio on the right side (including no items) concerning the SN ratio of the comprehensive estimated value for each item wherein the strength of correlation of the objects to be predicted is denoted by db units in Fig 4, that is to say, the value gained by subtracting the SN ratio on the right side from the SN ratio on the left side. Namely, Fig 5 shows the level of the effects on the SN ratio in the case wherein each item is included relative to the case wherein the item is not included. Accordingly, it is shown that the items wherein the calculated factorial effect value is positive can be used to increase the SN ratio of the comprehensive estimated value. In the method that is referred to as the two-sided T method, only such items that the factorial effect value is positive are selected for analysis in accordance with the above-described T method.

In the case wherein prediction is carried out in accordance with the above-described T method (two-sided T method), the actual precision of prediction cannot, as before, be increased. Thus, the present inventor first applied an idea of a time difference model to the T method in order to carry out a conversion process taking the non-linearity between the signal value and the data value on the item into consideration and, furthermore, used a method for maximizing the SN ratio of the comprehensive estimated value as a method for selecting an item instead of a method for selection depending on whether the factorial effect value is positive or negative.

First, the time difference model is described.

Originally, the T method is not a method for predicting chronological data. This is method for selecting the most influential factor in terms of the value of an event to which a large number of factors relate without particularly having a concept of a time access. In the case where the T method is used as the prediction method as it is, as described above, the relationship between the data for each item and the signal value specified for each member so that the signal value of the next member is predicted. Accordingly, the data for each item of the next member should be predicted in order to predict the signal value of the next member. At this time, it can be easily assumed that estimation errors of the data for each item accumulate and deteriorate the precision of the prediction of the signal value. In the case where the next signal value is predicted on the basis of data that chronologically transit, an event that will happen in the future should have its sign in the past particularly in the field of economic prediction or sales prediction. Therefore, the inventor determined to establish the correspondence between the signal value and the data for each item not between members during the same period of time but between members that shifted by a predetermined a period of time. Typically, the operation means for implementing the prediction method according present embodiment make the data for each item during a certain period of time correspond to the signal value after predetermined period of time so as to carry out of calculations in Formulas 1 to 5 between these. The comprehensive estimation equation that has gained as a result of the above, is used to estimate (predict) the signal value after predetermined period of time on the basis of data for each item during any period of time at present (most recent).

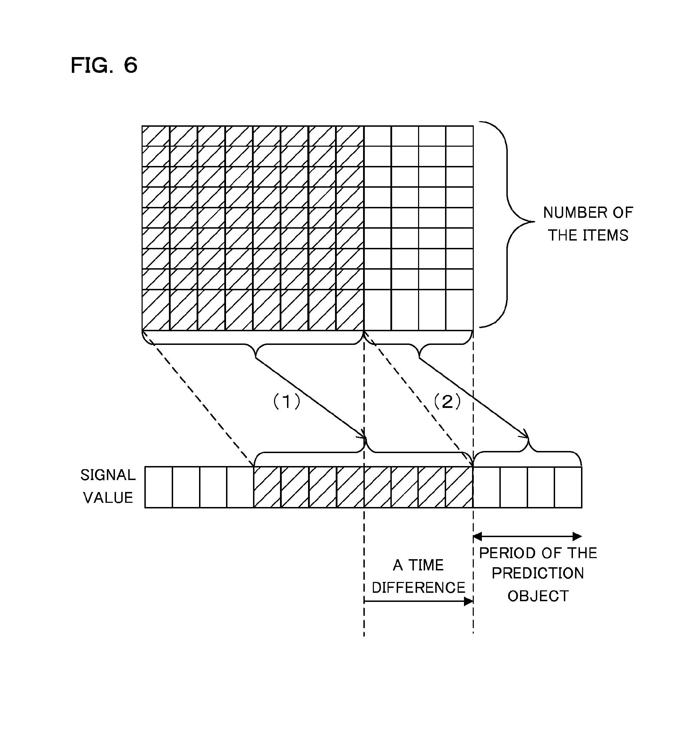

Fig 6 is a schematic diagram illustrating a time difference model. Fig 6 shows the elapse of time from left to right. Each rectangular in the lower part of Fig 6 indicates a signal for a unit period of time and each rectangular in the upper part indicates data for each item for each unit period of time during the same period of time as of the signals. For example, signals of each month, which is the unit period of time, and data for an item in each month are shown. There are a plurality of items for each signal. In the time difference model a signal is not made to correspond to the data for items during the same period of time but the signal value $M_i$ is made to correspond to pieces of data $X_{i-t1}$, $X_{i-t2}$, ... $X_{i-tk}$ (for example, t = 4 months). According to the prediction method of the present embodiment, the operation means uses the T method by applying the signal values and the data for items for which the time difference model is used to the relationship between the $M_1$ (in Formulas 1 to 5) and the data for items $X_{11}$, $X_{12}$, ... $X_{1k}$. Thus the signal value during the object period to be predicted can be found by applying the value of the data for an item at a predetermined period of time before, that is to say the value of the data for each item in the corresponding period (for months here) close to the object period to be predicted to Formula 4. Namely, in the time difference model according to the prediction method of the present embodiment, the operation means specifies the relationship between the data for a plurality of items and the signal value after predetermined period of time, and thus makes it possible to predict the signal value in the future from the data for the past or present items.

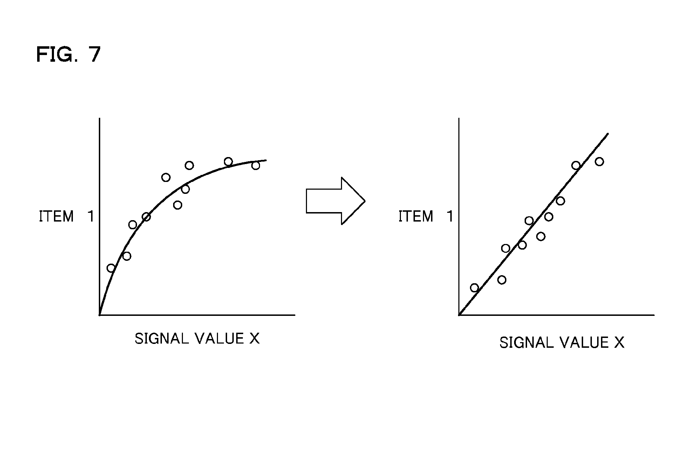

Thus, in the prediction method according to the present embodiment, a conversion process taking nonlinearity into consideration is carried out on the signal value X. Fig 7 is a graph showing the relationship between the signal values before and after the conversion process and the data value for each item. The left side in Fig 7 shows the relationship between the data for certain item and the signal value before the conversion process and the right side shows the relationship between the data for certain item and the signal value after the conversion process. In the T method, a straight line that passes through the point zero is set for the relationship between the data for each item and the signal value so that weighing on the basis of the amount of shift from this straight line (digitalization as the SN ratio) is carried out. That is to say the relationship as shown in the right side of Fig 7 is assumed. The smaller dispersion relative to the straight line items have, the more the items contribute toward the change in the signal value while the greater dispersion items have, that is to say, the less correlation exists between the change in the data value for the items and the change in the signal value, the less items contribute to the change in the signal value. However, naturally the data of all the items are not plotted on a straight line in the relationship vis-à-vis the signal value, that is to say, a linear relationship. There are some items having strong relationship represented by a quadric function that does not pass the original point as shown in the left side of Fig 7. Therefore, in the prediction method according the present embodiment, the operation means linearly converts the data $X_{ij}$ for an item (i is the number of members (1 through n), j is the number of items (1 through k)) to $x_{ij}$ showing a linear relationship and the supposition that there is a nonlinear relationship (quadric function).

Concretely, the operation means calculates an average value of the data $X_{ij}$ and the signal value Mij as unit space data that is standard between the data $X_{ij}$ (1 through n) for an item and the signal value Mij (1 through n). The operation means carries out standardization process for subtracting the average value in the unit space from the signal value Mij and from each value of the item data $X_{ij}$. In addition, the operation means approximates the signal value Mij in a polynomial expression such as quadric expression using the value of item data $X_{ij}$ that varies. Next, the operation means convert the value $X_{ij}$ (1 through n) to $X_{ij}$ using this approximated value. In the case where the relationship between the signal value and the item data is linear, the value $X_{ij}$ (1 through n) of the item data is applied to Formula 4 without any change, or the data of standardized $X_{ij}$ (1 through n) is applied to Formula 4, while in the case of nonlinearity, the value of $x_{ij}$ (1 through n) after the conversion is applied to Formula 4.

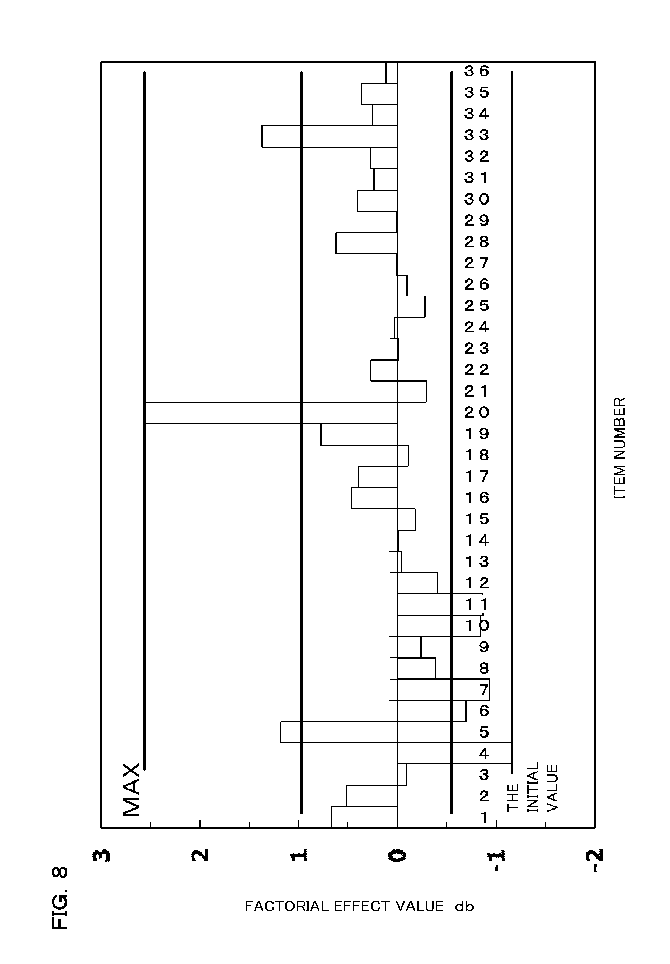

In addition, in the prediction method according to the present embodiment, the time difference model is applied to the signal value and the data for each item as method for selecting an item and furthermore, the operation means calculates the SN ratio of the comprehensive estimated value and selects the item that makes the SN ratio of the comprehensive estimated value maximum on the basis of the corresponding data for each item and the signal value after the conversion process taking the nonlinearity into consideration. Fig 8 is a graph conceptually showing the process for determining the optimal number of items to be selected. First, the SN ratio of the comprehensive estimated value for each item is calculated as in Formulas 1 to 5 for the signal value and the data for each item on which a linear conversion process has been carried out by using the time difference model. Thus, as described for Figs 4 and 5, the operation means calculates the factorial effect value for each item from the SN ratio of the comprehensive estimated value. As shown in Fig 8, the operation means first sets the minimal value of the factorial effect value for each item as the initial threshold value. The operation means select an item of which the factorial effect value is the threshold value or greater and calculates the SN ratio of the comprehensive estimated value for the signal value (for example, each of 1 through n). In the case the threshold value is the initial value, all of the items are selected. Next, the operation means set the value gained by adding a predetermined value to the threshold value as the next threshold value and selects an item of which the factorial effect value is the threshold value or greater in the same manner so as to calculate the SN ratio of the comprehensive estimated value for the signal value. When the operation means repeats this process until the threshold value reaches the maximum value of the factorial effect value or greater, that is to say reaches the lateral line indicated as MAX in Fig 8, it is possible to calculate the SN ratio of the comprehensive estimated value for the data for a plurality of selected items for each the numbers of items. Here, the operation means may set the initial value of the threshold value to the maximum value MAX or greater, and thus, may calculate the SN ratio of the comprehensive estimated value by selecting items of which factorial effect value are each threshold value or greater when the threshold value is made smaller by a predetermined value repeatedly.

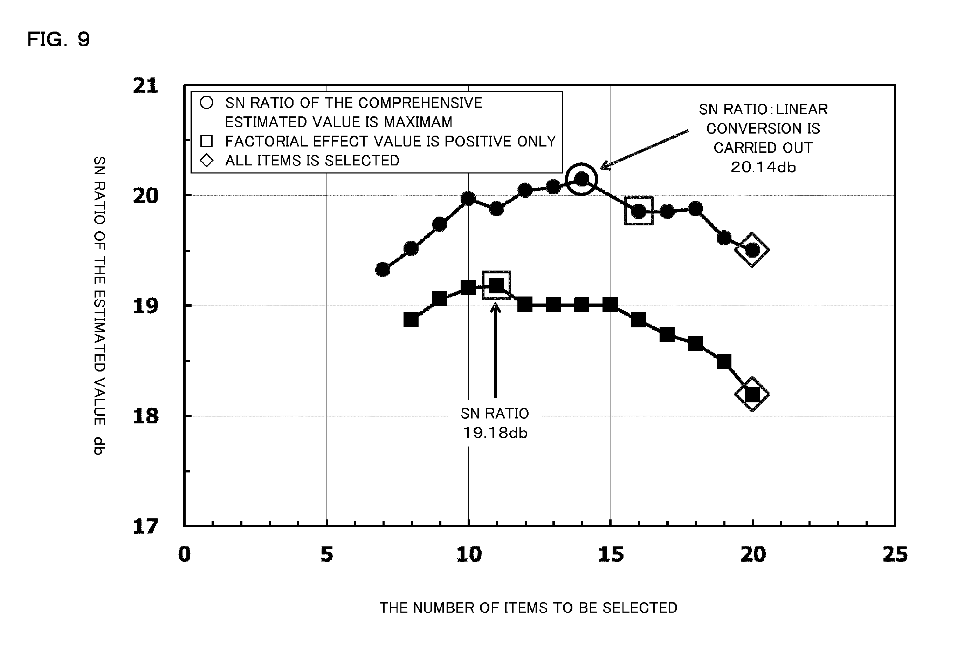

Fig 9 is a graph showing the correspondence between the number of items to be selected and SN ratio of comprehensive estimated value. The SN ratio of the comprehensive estimated value is shown for the number of items in the case where items are selected in accordance with the method shown in Fig 8. In Fig 9, the transitions indicated by solid circles are the SN ratios of the comprehensive estimated values in the case where linear conversion is carried out while the transitions indicated by solid squares are the SN ratios of the comprehensive estimated values in the case where no linear conversion is carried out. As shown in Fig 9, the SN ratios of the comprehensive estimated values are higher as a whole, that is to say the precision of the prediction is higher, in the case where linear conversion is carried out. In addition, open squares from among the values of SN ratios indicate the SN ratios of the comprehensive estimated values in the case where items are selected using the two-sided T method according to which items of which the factorial effect value is positive, are selected. The open diamonds indicate the SN ratios of the comprehensive estimated values in the case where all the items are selected. The white circle indicates the number of items where the comprehensive SN ratio becomes maximum. As shown in Fig 9, the method for selecting items of which factorial effect value is positive does not make the SN ratio of the comprehensive estimated value maximum in the case where nonlinear conversion is carried out. As shown in Fig 9, the optimal item that makes the SN ratio of the comprehensive estimated value highest can naturally be selected when the operation means implements the method shown in Fig 8.

As described above, the present inventor acquired such knowledge that the time difference model can be applied to the T method so as to calculate the SN ratio of the comprehensive estimated value after a conversion process has been carried out taking the nonlinearity between the signal value and pieces of data for items into consideration, and thus, the method for selecting the item that makes the SN ratio maximum can be applied to increase the precision of the prediction. In addition to the method for the time difference model, in selecting items that maximizes the SN ratio of the comprehensive estimated value, the present inventor acquired such knowledge that the signal period that is appropriate for prediction can be selected from the signal periods recorded (members 1 through n), and thus, the precision of the prediction can be increased. The operation means selects the signal period that is appropriate for the prediction on the bass of the existence of the periodicity in the transitions of the signal values and the trend of similarity among the items. In the following, a method for selecting the signal period that can increase the precision of the prediction is concretely disclosed.

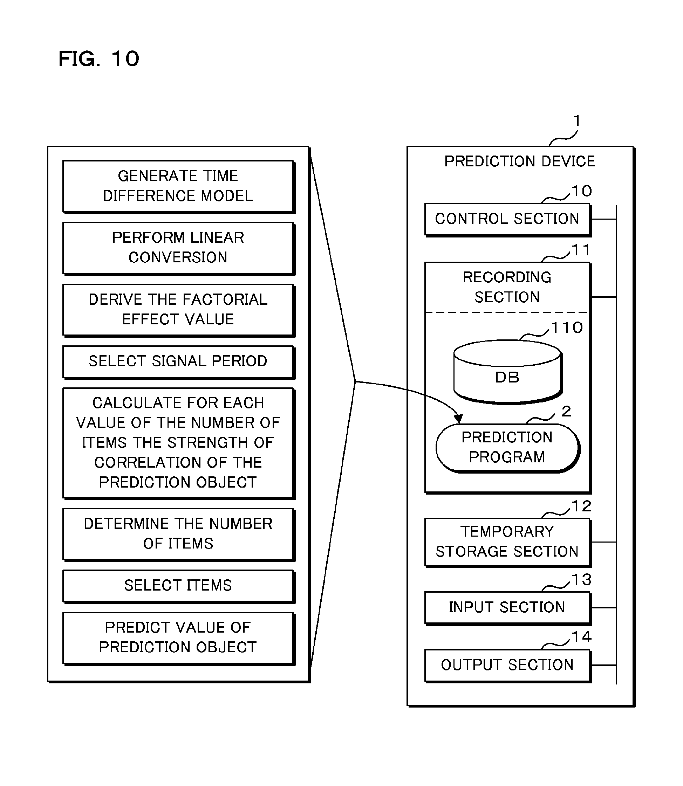

First, the structure of the prediction device for implementing the entire prediction method including the method is described. Fig 10 is a block diagram showing the structure of a prediction device 1 according to the present embodiment. The prediction device 1 is made of a computer such as a personal computer or a server computer. The prediction device 1 is provided with a control section 10, a recording section 11, a temporary storage section 12, an input section 13 and an output section 14.

The control section 10 is made of a CPU (central processing unit). The control section 10 controls the personal computer or the server computer on the basis of the below-described prediction program 2 so as to allow the prediction device 1 through function according to present embodiment. Here the control section 10 functions as the operation means for implementing the prediction method.

The recording section 11 is made of a nonvolatile memory such as a ROM (read only memory) or a hard disk drive. Here, the recording section 11 may be made of an external hard disc drive, an optical disc drive or other types of recording apparatus connected through a communication network. That is to say the recording section 11 may be made of one or a plurality of any types of information recording media that are accessible from the control section 10.

The recording section 11 stores A prediction program 2 that includes various types of procedures for implementing the prediction method according to the present embodiment. In addition, a portion of the recoding region in the recording section 11 is used as a database (DB) 110 for recording signal values and also recording the data for a plurality of items that correspond to the signal values. The control section 10 can read and write signal values and the data for a plurality of items from and into the database 110. The database 110 records the signal value for each member and the data for each item chronologically in the format as shown in Fig 3, for example.

The temporary storage section 12 is made of a nonvolatile memory such as a DRAM (dynamic random access memory) or an SRAM (static random access memory). The temporary storage section 12 temporarily stores information generated through the process carried out by control section 10.

The input section 13 accepts an input through the operation by the user using a keyboard, a mouse and the like.

The output section 14 outputs the results of information processing by the control section 10 on a display unit such as a liquid crystal monitor or by means of a printing unit such as a printer.

In the thus formed prediction device 1, the control section 10 carries out the process on the basis of the prediction program 2 so that a signal value for a future event can be predicted.

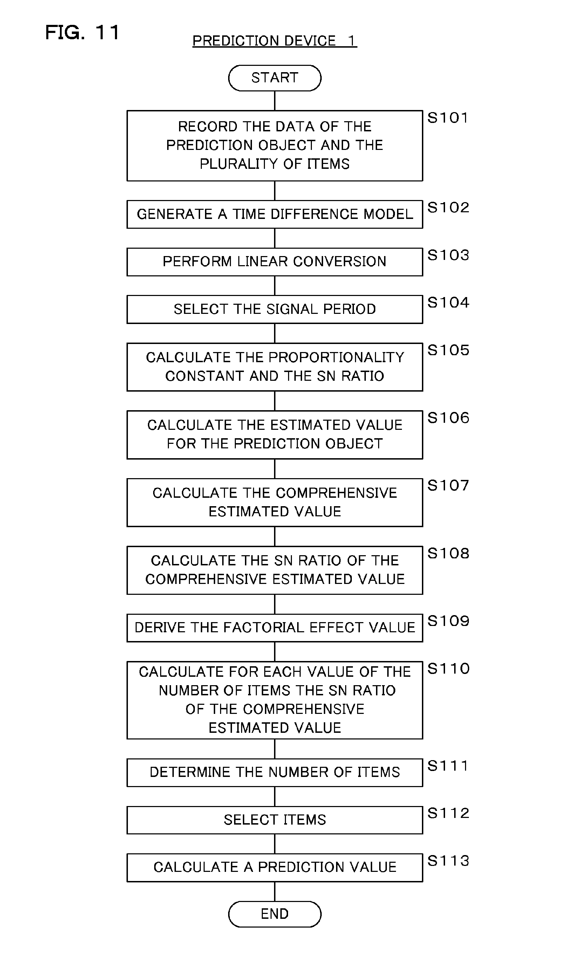

Fig 11 is a flow chart showing an example of the prediction process procedure in the prediction device 1 according to the present embodiment.

The control section 10 accepts an input of a signal value and the data for a plurality of items that relate to the signal value from the input section 13 and records the accepted signal value and the data for each item in the database 110 in the recording section 11 (Step S101). Here the signal value and the data for each item recorded in the database 110 may be input from input section 13, may be input from another apparatus through a communication network or may be input from another information recording medium.

The control section 10 generates a time difference model on the basis of the signal value and the data for each item that have been recorded in the database 110 in the recording section 11 (Step S102). As described in reference to Fig 6, the time difference model generated in Step S102 makes correspondence between the data for each item and the signal value at point of time after a predetermined period from the point of time corresponding to the data for each item. That is to say, in Step S102, the control section 10 makes correspondences between the signal values and the data for each item that have been chronologically stored with shifts by a predetermined period of time.

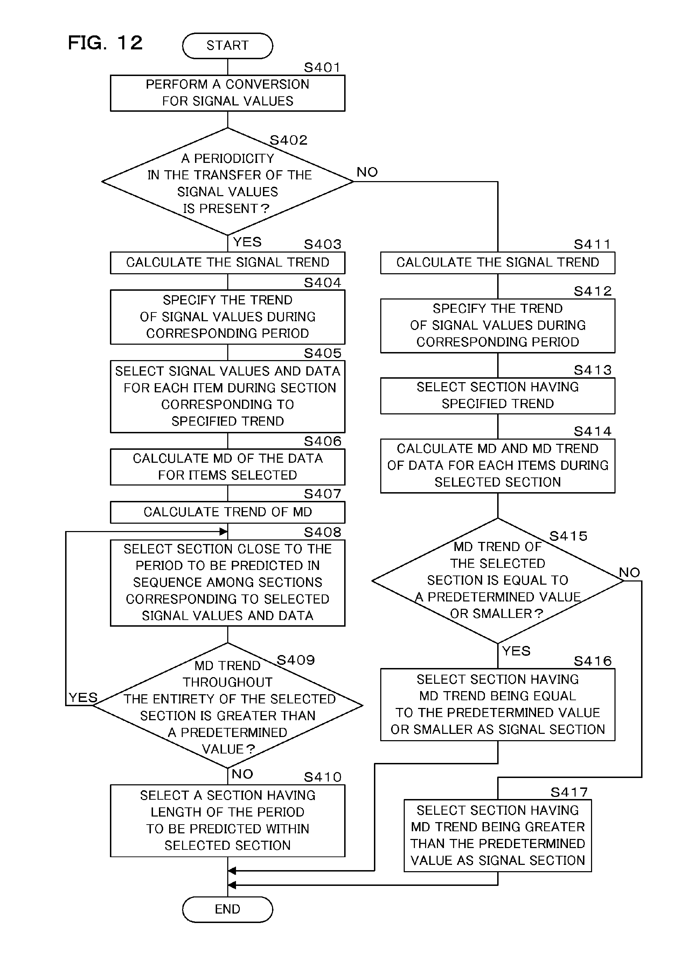

The control section 10 linearly converts the data for each item on the basis of the relationship between a signal value and data for each item that correspond to each other in the generated time difference model (Step S103). The control section 10 uses the data after linear conversion to carry out a process for selecting the signal period to be used for the prediction (Step S104). The process for selecting a signal period is described in details in reference to the below-described flow chart in Fig 12.

The control section 10 calculates the proportionality constant β and the SN ratio η (duplicate ratio) for each item as Formulas 1 and 2 in the above on the basis of the signal value in the signal period selected in Step S104 and the corresponding item data in the time difference model (Step S105).

The control section 10 calculates the estimated value of the output as in Formula 3 for each member in the selected signal period using the proportionality constant β and the SN ratio η (duplicate ratio) for each item (Step S106).

The control section 10 calculates the comprehensive estimated value using the SN ratio (duplicate ratio), which is the precision of estimation for the estimated value, as the weighing coefficient as in Formula 4 (Step S107).

Next, the control section 10 calculates the SN ratio (db) of the comprehensive estimated value for each item on the basis of the signal value and the comprehensive estimated value as in Formula 5 (Step S108).

Te control section 10 derives the factorial effect value for each item (Step S109). As described above, the factorial effect value is calculated for each subject item by finding the difference between the SN ratio of the comprehensive estimated value for the data for each item excluding the subject item and the SN ratio of the comprehensive estimated value for the data for each item including the subject item. The SN ratio of the comprehensive estimated value is the strength of the correlation between the signal value and the data for the subject item and is a value represented as the logarithm of the value that is proportional to the inverse number of the dispersion.

Next, the control section 10 calculates the SN ratio of the comprehensive estimated value for the data for a plurality of items that have been selected in order of their factorial effect value for each the number of item (Step S110). The details of the process in Step S110 are the same as described above in reference to Fig 8.

The control section 10 determines the number of items that makes the SN ratio maximum on the basis of the SN ratio of the comprehensive estimated value for each the number of items (Step S111).

The control section 10 selects the items of which the number has been determined in Step S111 (Step S112). Then the control section 10 applies the data for the items selected from the data for each item a predetermined period of time before the corresponding period of time to be predicted in the time difference model, that is to say, from the data for each item during the corresponding period of time close to the period of time to be predicted, to Formula 4 so as to calculate the prediction value (Step S113). β and η in Formula 4 are calculated in Step S104 (calculated using data after selecting the time difference model, the linear conversion and the signal period). In Step S113, the prediction value is output from the output section 14 or recorded in the recording section 11. In the case where the signal value is standardized the prediction value can be found through inverse transformation.

Fig 12 is a flow chart showing an example of the signal period selecting process procedure in the prediction device 1 according to the present embodiment. The process procedure shown below corresponds to the details of the process for selecting the signal period in Step S104 in Fig 11.

The control section 10 standardizes the signal value (subtracts the average value) in order to reduce the fluctuation ratio and performs the conversion to calculate a logarithm value (Step S401).

The control section 10 determines presence or absence of a periodicity in the transition of the signal value after the signal value has been converted (Step S402). The details of an example in Step S402 are in the following: presence or absence of a periodicity is determined in accordance with another method. The control section 10 selects a signal value of a sample time of which the length has been changed little by little starting from a predetermined point in time (for example, the original point for the recording period of time) from the signal values in time series after the conversion. The control section 10 calculates the sample autocorrelation coefficients of the signal values during the selected sample period of time for each sample time, plots the sample autocorrelation coefficient relative to the length of the sample time, and determines presence or absence of a peak so as to determine presence or absence of a periodicity.

The control section 10 calculates the signal trend during the entire recording period (all members) or during a predetermined period of time (for example, for 10 years) if it has been determined that a periodicity is present (YES in S402) (Step S403). In order to calculate the signal trend it is possible to use any of the various types of publicly known methods of trend calculation on chronological data, for example the application of a trend component model using a state space model.

The control section 10 specifies, among the trend calculated in step S403, the trend for signal values in a period being the same as the period corresponding to data for items before the time difference model is applied (corresponding period), the data for items being associated with the signal values in the object period to be predicted (Step S404). In Step S404, in particular, the control section 10 judges whether the trend during the corresponding period has a positive inclination or a negative inclination.

The control section 10 selects signal values and data for each item (after the time difference model is applied) in a portion of the corresponding period having the same trend properties as the trend specified in Step S404 (a positive inclination or a negative inclination) (Step S405).

The control section 10 calculates the Mahalanobis generalized distance (hereinafter referred to as MD) of the data for items (after linear conversion) during a selected portion (Step S406).

The control section 10 calculates the trend of the MD in the selected portion (Step S407).

The control section 10 selects a portion close to the object period to be predicted in sequence from a plurality of discontinuous portions (portions having the same signal trend) that form the selected portions (Step S408). The control section 10 determines whether or not the MD trend is greater than a predetermined value (for example, 1.0) throughout the entirety of the selected portion (Step S409). If the MD trend is determined to be greater than the predetermined value in Step S409 (YES in S409), the control section 10 returns the process to Step S408 and then selects another portion that is next closer to the object period to be predicted.

If it is determined that the MD trend is not greater than the predetermined value throughout the entirety of the selected portion, that is to say, the MD trend partially includes a portion having the predetermined value or smaller value (NO in S409), the control section 10 selects a period having a length of the object period to be predicted and closest to object period to be predicted within the portion (Step S410) and completes the process.

If it is determined that a periodicity is absent in Step S402 (NO in S402), the control section 10 calculates the signal trend throughout the entire recording period (all members) or during the predetermined period of time (for example, for 10 years) (Step S411).

Next, the control section 10 specifies, among the trend calculated in Step S411, the trend for signal values in a period being the same as the period corresponding to data for items before the time difference model is applied (a corresponding period), the data for items being associated with the signal values in the object period to be predicted (Step S412). In Step S412, in particular, the control section 10 judges whether or not the trend during the corresponding period has a positive inclination or a negative inclination.

The control section 10 selects a portion having the same trend as the trend specified in Step S412 (a positive inclination or a negative inclination) (Step S413).

The control section 10 calculated the MD and the MD trend of the data for each item in the portion selected in Step S413 (Step S414).

The control section 10 determines whether or not the MD trend in a period being the same as the period corresponding to data for items before the time difference model is applied (corresponding period), the data for items being associated with the signal values in the object period to be predicted, has a predetermined value (for example 1.0) or smaller (Step S415).

If it is determined that the MD trend has a predetermined value or smaller in Step S415 (YES in S415), the control section 10 selects a portion where the MD trend has a predetermined value or smaller as a signal period from among the portions selected in Step S413 (Step S416) and then completes the process.

In the case where the MD trend is greater than a predetermined value in Step S415 (NO in S415), the control section 10 selects a portion where the MD trend is greater than a predetermined value a the signal period from among the portions selected in Step S413 (Step S417) and then completes the process.

Here, the prediction method disclosed in the present embodiment is a particular method for the case where a periodicity is absent in the transition of the signal values (S411 through S417). Accordingly, the process in steps S403 to S410 is not limited to the one described above but may be a process in accordance with other methods as long as the process is suitable for the case having a periodicity.

The control section 10 selects the signal period as shown in the flow chart in Fig 12, and in particular selects a signal period by changing the method depending on presence or absence of a periodicity in the transition of the signal values, and as a result, a signal period having a transition trend that is close to that before the predetermined period of time to be predicted is selected depending on presence or absence of a periodicity. In the case where a periodicity is absent in particular, a prediction formula is specified on the basis of the period that is similar to the MD trend of the close signal values and the data for each item so that the effects from a period that is not similar can be reduced and the precision of the prediction can be increased.

Next, concrete examples to which the prediction method using the prediction device 1 has been applied are described.

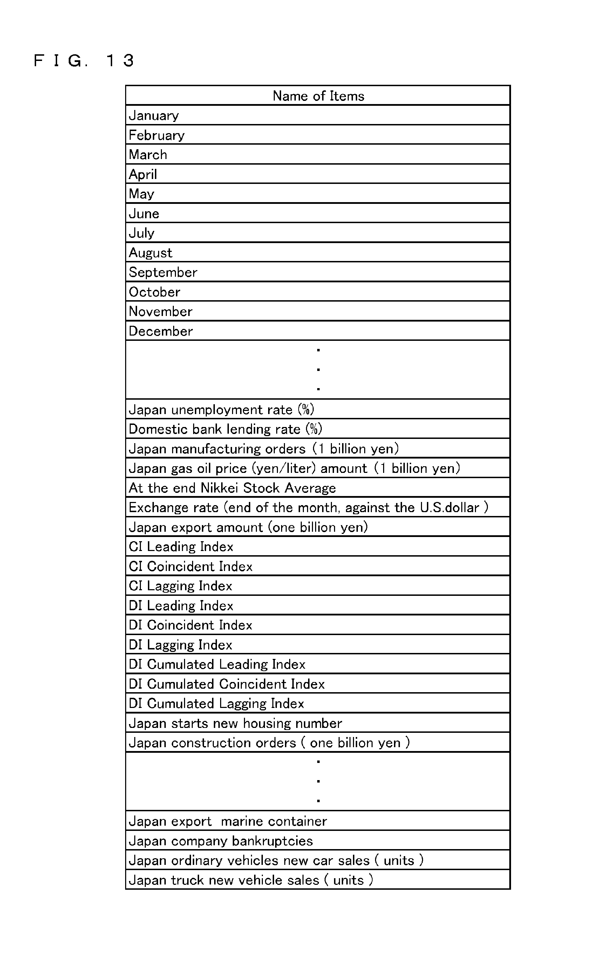

An example where the prediction method according to the present embodiment is applied to a prediction of demand of construction machines is described below. Fig 13 is a diagram illustrating the contents of items in the present examples. In the present example, the prediction object (signal value) is the "number of shipped construction machines" and the items relating to the prediction object are various economic indices. As shown in Fig 13, "month", "unemployment rate (%) in Japan", "domestic bank lending rate (%)", and the like, are set as items of economic indices. For each of these items, data for each month are made to correspond to the members. Here, the items indicating the months such as "January", "February", and the like, are items that indicate the month to which each item corresponding to a member corresponds, and "1" is recorded for the member is the number of the shipments in the corresponding month as a signal value, and "0" is recorded for the other months. For example, as for the member in January, 2010, the data for the item "January" is "1" and the data for the items of other months "February" to "December" is "0". In the present example, the prediction device 1 predicts the "number of shipped construction machines" on the basis of 36 items in total, including 24 items related to economic indices (some of the items are not shown or the details thereof are different in Fig 13), and 12 items relating to the month.

In the following the respective cases where the prediction device 1 is applied to Example 1 and Example 2 are described. The object period to be predicted is different between Example 1 and Example 2. It is shown that a different signal period is selected depending in the difference in the object period to be predicted and as a result the prediction value can be calculated with high precision.

(Example 1)

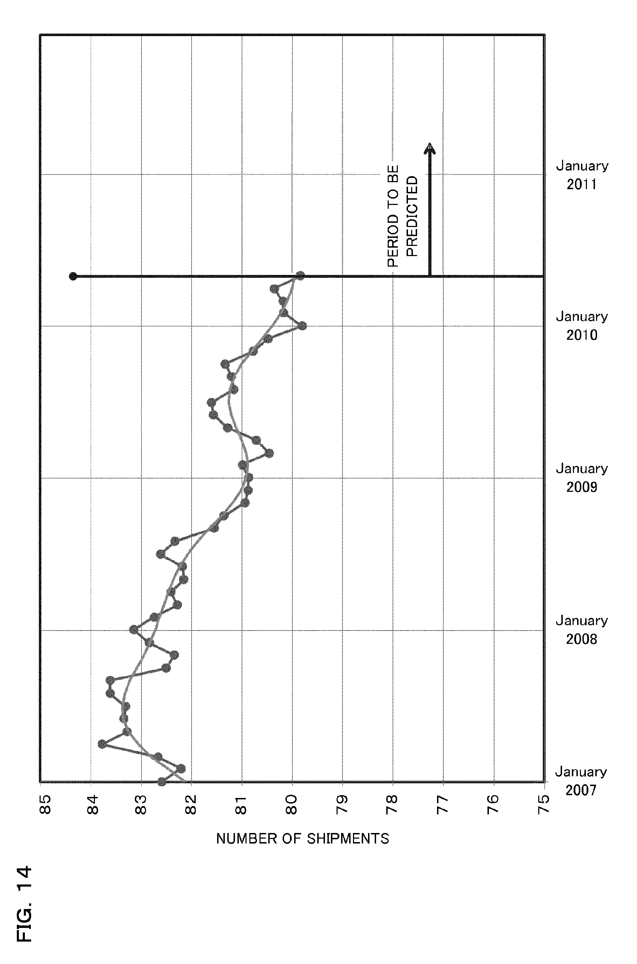

Fig 14 is a graph showing an example of the contents of the signal value used for the prediction in Example 1. The lateral axis in Fig 14 chronologically shows years and months and the lateral axis shows the number of the shipments. Here, the numbers of shipments in Fig 14 are real values. In Example 1, the prediction device 1 is used to predict the number of shipments for 12 months starting from June, 2010 to May, 2011 on the basis of the data for each item in Fig 13 relative to the chronological data for the numbers of shipments in Fig 14. Here, the prediction value by means of prediction device 1 is evaluated below on the basis of the real values of the numbers of shipments during the corresponding period of time.

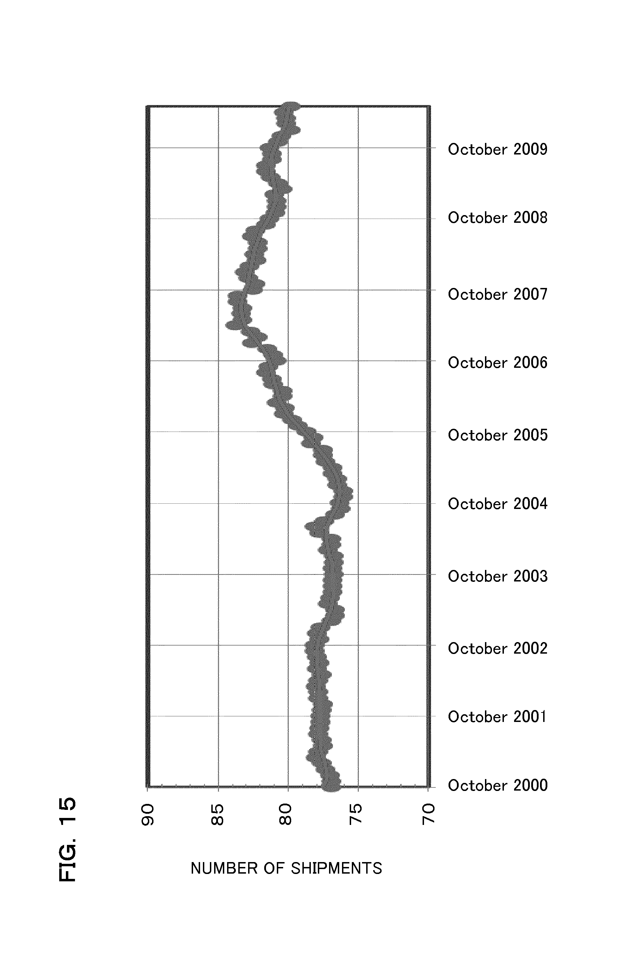

Fig 15 is a graph showing the signal values and the signal trend in Example 1. The lateral axis in Fig 15 chronologically shows the years and the months and the longitudinal axis shows the number of shipments. Here, the time widths along the lateral axis in Fig 15 are greater than the time width in Fig 14.

First, the control section 10 in the prediction device 1 applies a time difference model to the signal values of the chronological data and the data for each item corresponding each signal value as shown in Fig 15 (S101) so that the data for each item is linearly converted and a conversion process is carried out on the signal values (S401). In Example 1, the prediction period is 12 months, and therefore a time difference model with a shift of 12 months is applied.

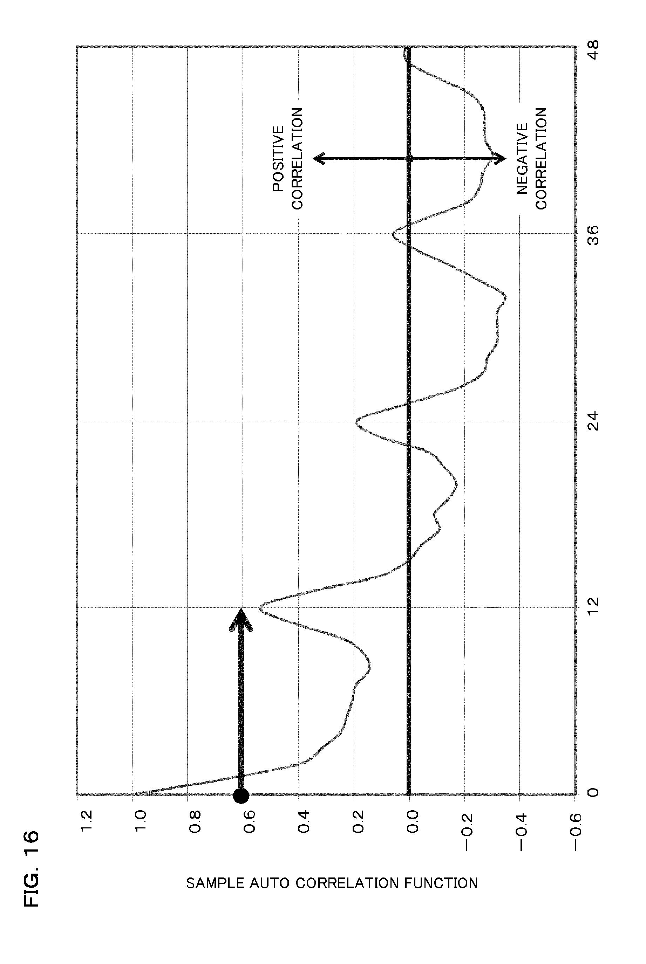

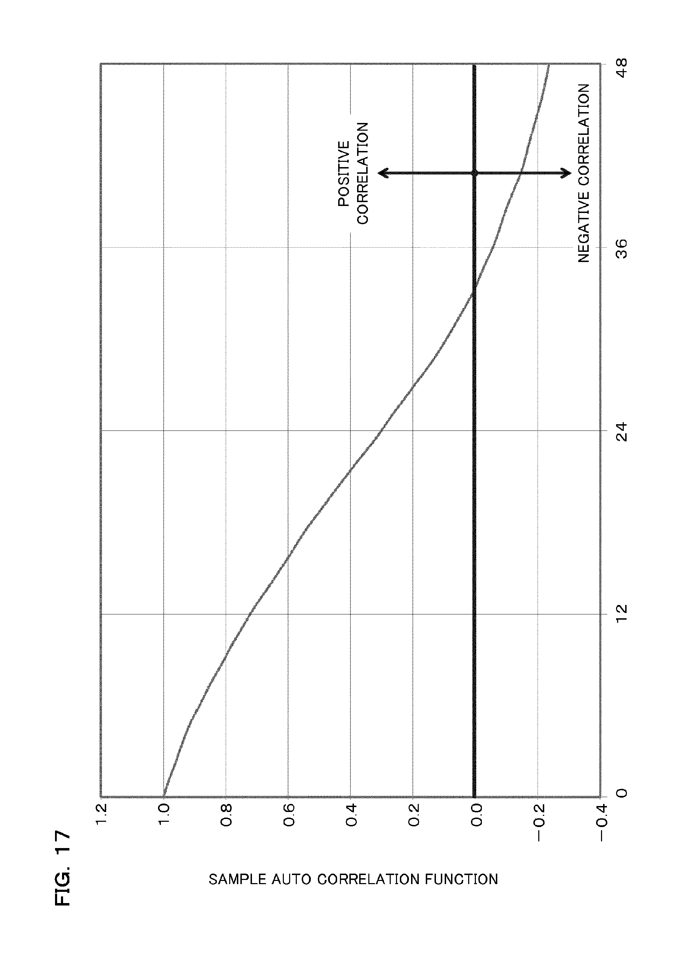

The control section 10 determines presence or absence of a periodicity in the transition of signal values on the basis of the chronological data. Fig 16 is a graph showing an example of plots of a sample autocorrelation function when it is determined that a periodicity is present. Fig 17 is a graph showing an example of plots of a sample autocorrelation function when it is determined that a periodicity is absent. It is determined that a periodicity is absent in the transition of signal values shown in Fig 15 because such a period of autocorrelation as that shown in Fig 16 is not detected (NO in S402).

Therefore, the control section 10 calculates the trend of the signal values after the conversion (S411) so as to judge the data for items corresponding to the object period to be predicted, that is to say the inclination of the signal trend close to the period from June, 2009 to May, 2010 that is a predetermined period of time (12 months) before the period of 12 months from June, 2010 to May, 2011 (S412). The control section 10 judges the inclination to be negative through the process in S412. The control section 10 selects a portion having the signal trend where the inclination is judged to be negative (S413).

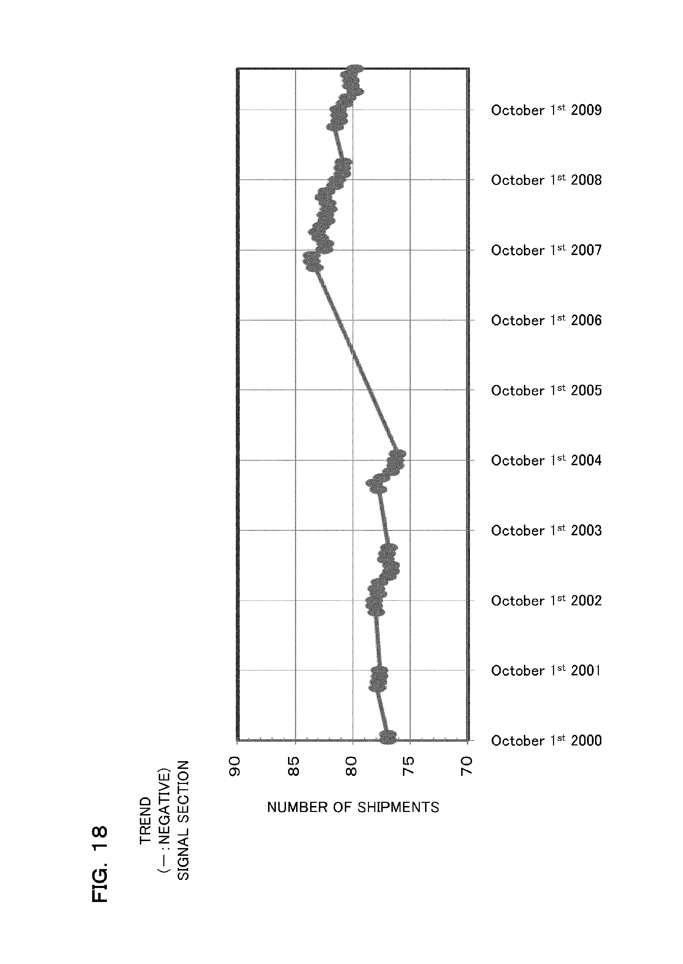

Fig 18 is a graph showing an example of signal period of which the trend is negative selected from the signal values in Fig 15. In Fig 18 the lateral axis chronologically shows years and months and the longitudinal axis shows the number of shipments in the same manner as in Fig 15.

The control section 10 assumes the portions selected as in Fig 18 to be a continuous period and calculates the MD of the data for each item corresponding to the signal values in this period and also calculates the MD trend (S414).

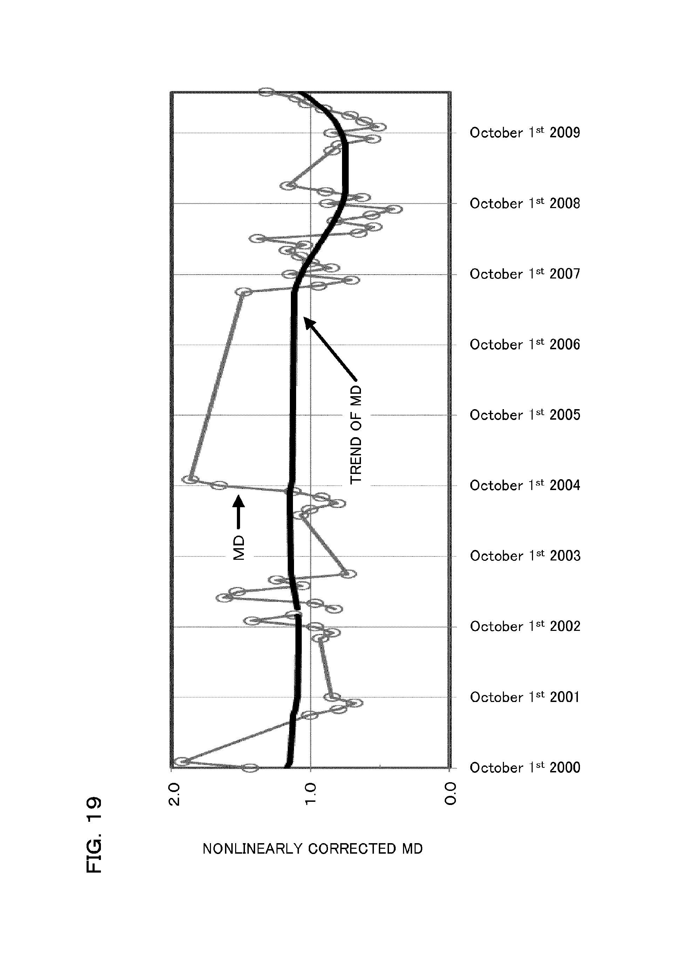

Fig 19 is a graph showing the MD of item data and the MD trend in the signal period selected in Example 1. The lateral axis in Fig 19 chronologically shows years and months and the longitudinal axis shows the MD values. In Fig 19, open circles show MD values and the thick line shows the MD trend. In reference to Fig 19, the MD trend is greater than 1.0 before December, 2007 and the MD trend has the minimum value on and after December, 2007.

The control section 10 determines whether or not the most recent MD trend has a predetermined value or smaller on the basis of the calculated MD trend (S415). In Example 1 shown in Fig 19, it is determined that the most recent trend is smaller that 1.0, which is the predetermined value (YES in S415). Accordingly, the control section 10 selects a portion where the MD trend is a predetermined value or smaller, for example, a portion of period from December, 2017 to May, 2010, as a signal period from among the portions selected in Step S413 (S416).

The control section 10 calculates the SN ratio of the comprehensive estimated value for each item in accordance with the two-sided T method on the basis of the signal values and the data for each item during the selected signal period (December, 2007 to May, 2010), and carries out a process for selecting the number of items that maximizes the SN ratio (S105 to S111). After that, the control section 10 selects items of which the number is the selected number (S112) and calculates the prediction value on the basis of the data for the items selected during the corresponding period (January to December, 2009) (S113).

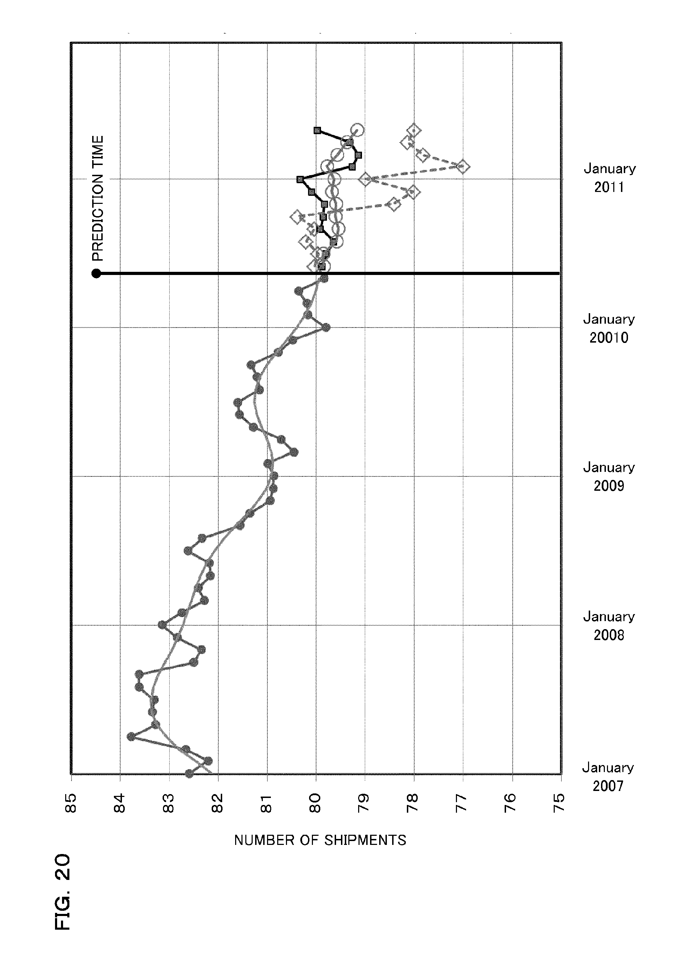

Fig 20 is a graph showing the prediction results gained by the control section 10 in the prediction device 1 in Example 1. The lateral axis in Fig 20 chronologically shows years and months and the longitudinal axis the numbers of the shipments. During the object period to be predicted, the values indicated by open circles are prediction values. In contrast, the values indicated by solid squares are real values. For comparison, open diamonds show the prediction values in the case where the signal period is the 24 months directly before the object period to be predicted. As shown in Fig 20, the prediction values are much smaller than the real values in the case where the signal period is 24 months directly before the object period to be predicted. However, it can be seen that the prediction values gained by the prediction device 1 have a sufficient precision as the prediction values for 12 months.

(Example 2)

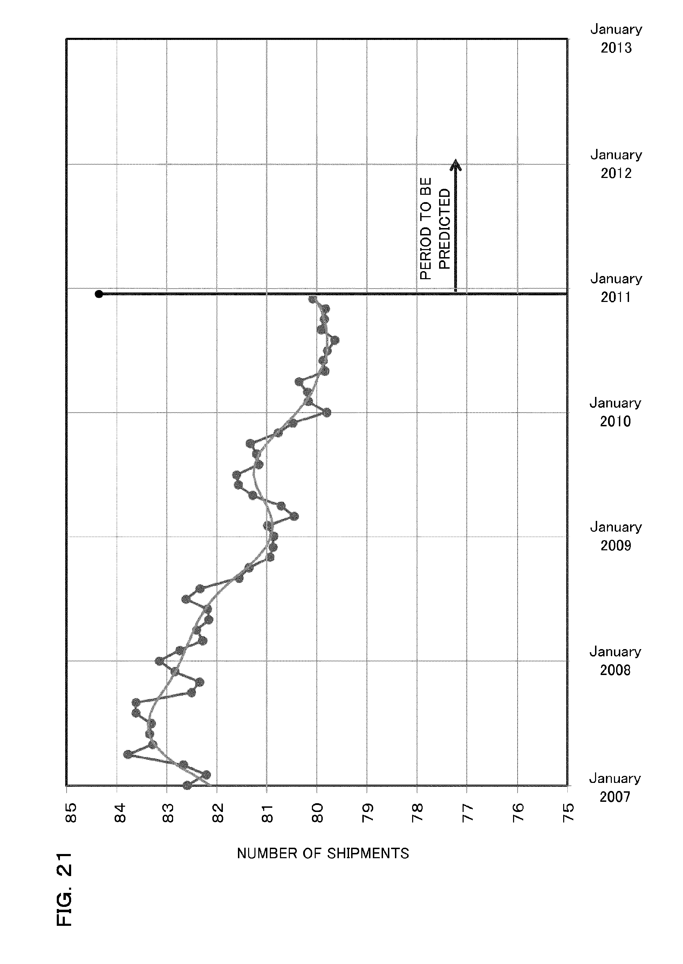

Fig 21 is a graph showing an example of the contents of the signal values used for the prediction in Example 2. The lateral axis in Fig 21 chronologically shows years and months, and the longitudinal axis shows the number of shipments. Here, the numbers of shipments in Fig 21 are real values. In Example 2, the prediction device 1 is used to predict the number of shipments for 12 months starting from January, 2011 to December, 2011 on the basis of the data for each item in Fig 13 relative to the chronological data for the numbers of shipments in Fig 21. Here, the prediction value by means by of the prediction device 1 is evaluated below on the basis of the real values of the numbers of shipments during the corresponding period of time.

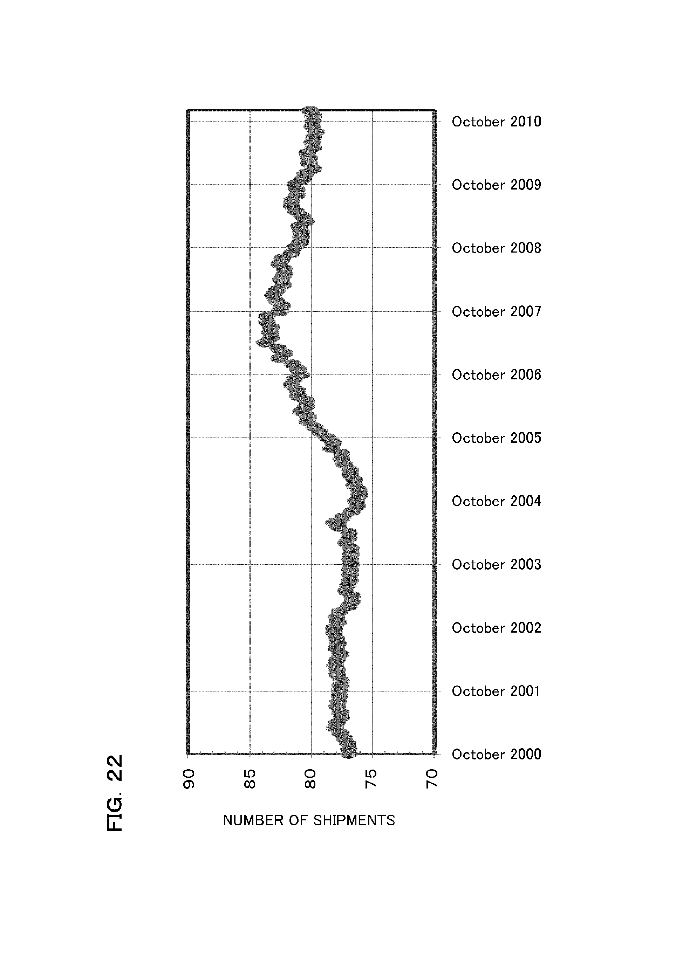

Fig 22 is a graph showing the signal values and the signal trend in Example 2. The lateral axis in Fig 22 chronologically shows the years and the months and the longitudinal axis shows the number of shipments. Here, the time widths along the lateral axis in Fig 22 are greater than the time width in Fig 21.

The control section 10 in the prediction device 1 applies a time difference model to the signal values of the chronological data and the data for each item corresponding each signal value as shown in Fig 22 (S101) so that the data for each item is linearly converted and a conversion process is carried out on the signal values (S401). In Example 2, the prediction period is 12 months, and therefore a time difference model with a shift of 12 months is applied.

The control section 10 determines presence or absence of a periodicity in the transition of signal values on the basis of the chronological data. A periodicity of autocorrelation as that shown in Fig 16 is not detected in the transition of signal values shown in Fig 22, and thus, it is determined that a periodicity is absent (NO S402).

Thus, the control section 10 calculates the trend of the signal values after the conversion (S411), and judges the inclination of the most recent signal trend of the data for the items corresponding the object period to be predicted, that is to say, the data in the period of from January, 2010 to December, 2010 a predetermined period of time (12 months) before the period of 12 months from January, 2011 to the December, 2011 (S412). The control section 10 judges that the inclination is positive through the processing in S412. The control section 10 selects the portions in the signal trend where the inclination is judged to be positive (S413).

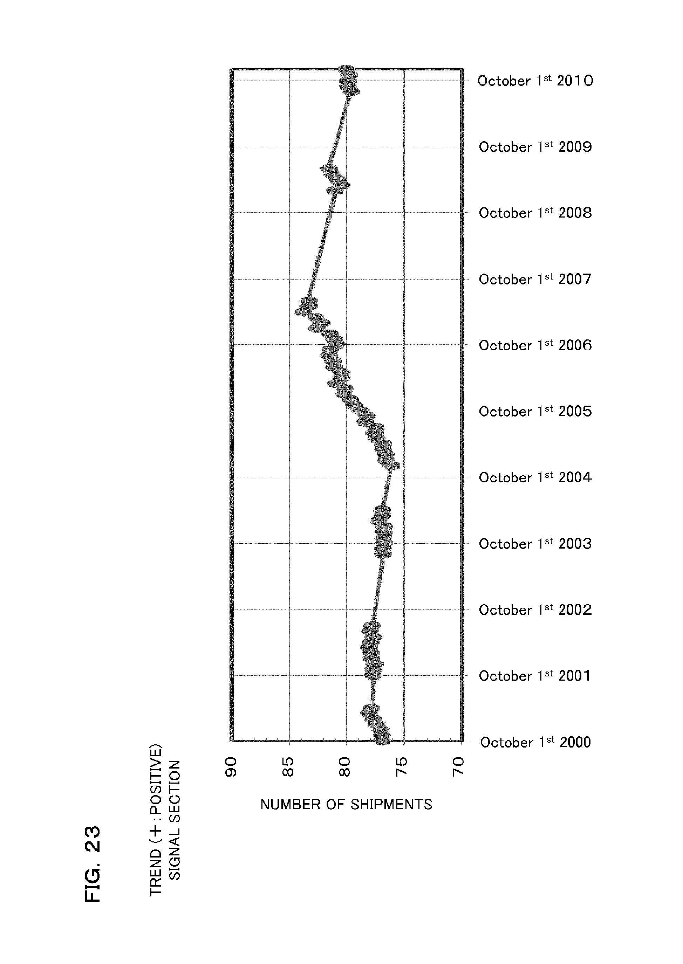

Fig 23 is a graph showing an example of the signal period in the positive trend selected from the signal values shown in Fig 22. In Fig 23 the lateral axis chronologically shows years and months and the longitudinal axis shows the numbers of the shipments in the same manner as in Fig 22.

The control section 10 assumes the portions selected as in Fig 23 to be a continuous period and calculates the MD of the data for each item corresponding to the signal values in this periond and also calculates the MD trend (S414).

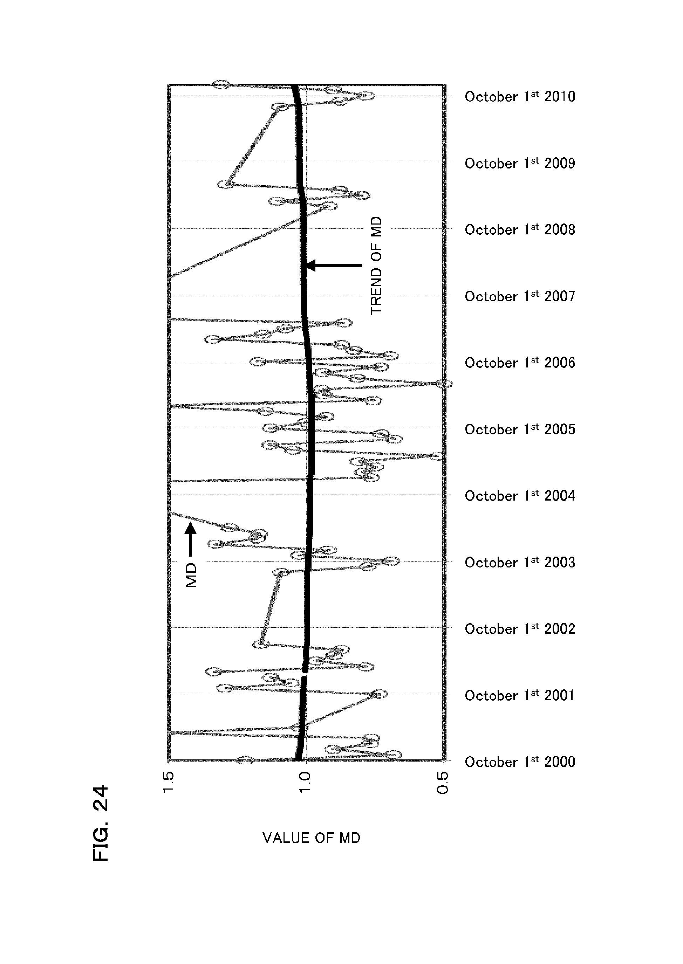

Fig 24 is a graph showing the MD of item data and the MD trend in the signal period selected in Example 2. The lateral axis in Fig 24 chronologically shows years and months and the longitudinal axis shows the MD values. In Fig 24, open circles show MD values and the thick line shows the MD trend. In reference to Fig 24, the MD trend is greater than 1.0 from October, 2000 to October, 2001, the MD trend is 1.0 or smaller from November, 2001 to the point close to January, 2007, and the MD trend again shows the tendency that the value is greater than 1.0 from January, 2007 to the most recent December, 2010.

The control section 10 determines whether or not the most recent MD trend has a predetermined value or smaller on the basis of the calculated MD trend (S415). In Example 2 in Fig 24, the most recent MD trend is determined to be greater than 1.0, which is a predetermined value (NO in S415). Accordingly, the control section 10 selects the portions where the MD trend is greater the predetermined value, that is the portion of period from October, 2000 to October, 2001 and the portion from January, 2007 to the most recent December, 2010 as the signal period from among the portions selected in Step S413 (S416).

The control section 10 calculates the SN ratio of the comprehensive estimated value for each item in accordance with the two-sided T method on the basis of the signal values and the data for each item during the selected signal period (October, 2000 to October, 2001 and January, 2007 to December, 2010), and carries out a process for selecting the number of items that makes the SN ratio maximum (S105 to S111). After that, the control section 10 selects items of which the number is the selected number of items (S112) and calculated the prediction value on the basis of the data for the items selected during the corresponding period (January to December, 2010) (S113).

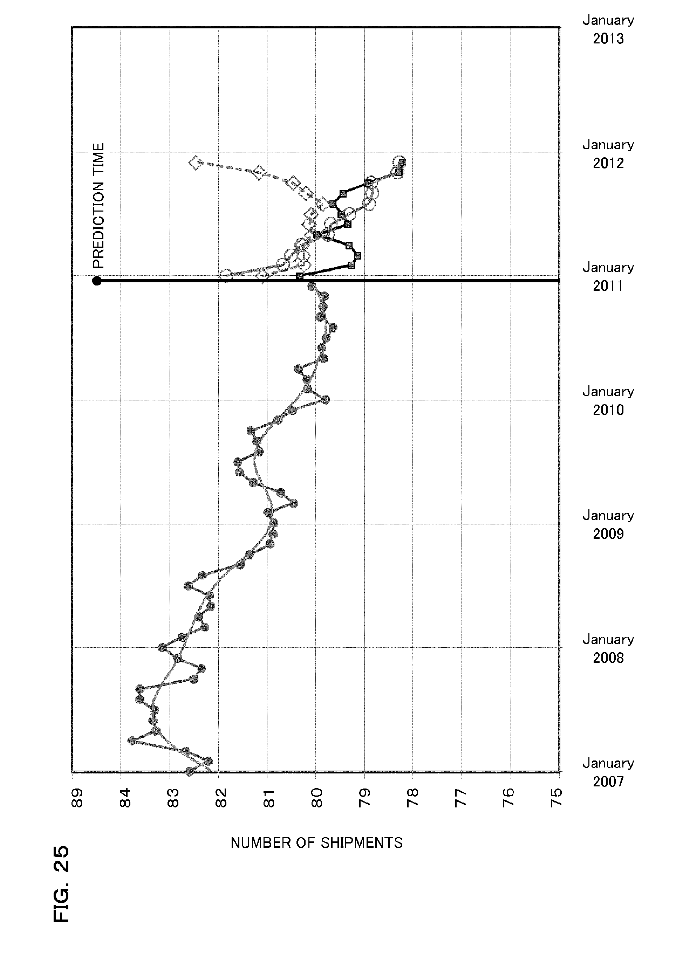

Fig 25 is a graph showing the prediction results gained by the control section 10 in the prediction device 1 in Example 2. The lateral axis in Fig 20 chronologically shows years and months and the longitudinal axis the numbers of the shipments. During the object period to be predicted, the values indicated by open circles are prediction values. In contrast, the values indicated by solid squares are real values. For comparison, open diamonds show the prediction values in the case where the signal period is the 24 months directly before the object period to be predicted. As shown in Fig 25, the prediction values are greater than the real values in the case where the signal period is 24 months directly before the object period to be predicted. In particular, the prediction values are significantly greater in the latter half of the object period to be predicted. However, it can be seen that the prediction values gained by the prediction device 1 have a sufficient precision as the prediction values for 12 months.

As described above, a method taking the MD and the MD trend into consideration is applied depending on presence or absence of a periodicity in the signal values, and thus it is possible for the prediction device 1 to predict the numbers of the shipments with high precision.

The present embodiment disclosed in the above is illustrated in all aspects and are regarded as not being limitative. The scope of the present invention is defined not by the above descriptions of the embodiment but by the claims, which intend to include all the meanings equivalent to the claims and all the modifications within the scope.

Reference Signs List

1       Prediction device
10      Control section (operation means)
11      Recording section (recording means)
13      Input section
14      Output section
110     Database
2       Prediction program (computer program)


**Claims**

1. A prediction device provided with a recording means for chronologically recording values relating to an event with which a plurality of factors are associated and the plurality of factors associated with the values as data for each of a plurality of items by associating the data with the values, and an operation means for operating based on a value and a piece of data for an item read out from values and data recorded in the recording means, the piece of data being corresponding to the value, wherein the operation means selects a portion of items from the plurality of items on the basis of a factorial effect value indicating the strength of a correlation between the plurality of items and changes of the value, and predicts a value relating to the event during an object period to be predicted on the basis of the data of the selected portion of items, **characterized in that**
the operation means comprises:

   a determination means for determining presence or absence of a periodicity in a trend of chronological change of the value during a recording period for the value recorded in the recording means;
   a selection means for selecting a period, within the recording period, having a same trend as the trend of chronological change of the value during a corresponding period earlier than the object period to be predicted by a predetermined period if the determination means determines that a periodicity is absent;
   a period discrimination means for discriminating a period, from the period selected by the selection means, a period to which the data for the plurality of items during the corresponding period belongs;
   an item selection means for selecting a plurality of items on the basis of a factorial effect value derived from data for the plurality of items during the discriminated period and the value corresponding to a period later than the discriminated period by a predetermined period; and
   a prediction means for calculating a prediction value during the object period to be predicted on the basis of data for the items selected by the item selecting means during the corresponding period.

2. The prediction device according to Claim 1, **characterized in that**
the determination means comprises:

   a means for calculating an autocorrelation coefficient for each period by changing the period for the values recorded chronologically;
   a means for determining presence or absence of a peak in a distribution of the autocorrelation coefficient calculated for each period, and
   the determination means is configured to determine that a periodicity is present if it is determined a peak is present.

3. The prediction device according to Claim 1, **characterized in that**
the period discrimination means comprises:

   a first calculation means for calculating Mahalanobis's generalized distance of data for the plurality of items during the period selected by the selection means;
   a second calculation means for calculating a trend of the calculated Mahalanobis's generalized distance on the basis of a trend model, and
   the period discrimination means is configured to discriminate a period having a same trend as a trend of data for the plurality of items during the corresponding period, within the period selected by the selection means, as the period to which the data for the plurality of items during the corresponding period belongs.

4. A prediction method executed in a device being provided with a recording means for chronologically recording values relating to an event with which a plurality of factors are associated and the plurality of factors associated with the values as data for each of a plurality of items by associating the data with the values, and an operation means for operating based on a value and a piece of data for an item read out from values and data recorded in the recording means, the piece of data being corresponding to the value, wherein the operation means selects a portion of items from the plurality of items on the basis of a factorial effect value indicating the strength of a correlation between the plurality of items and changes of the value, and predicts a value relating to the event during an object period to be predicted on the basis of the data of the selected portion of items, **characterized in that** the operation means:

> determines presence or absence of a periodicity in a trend of chronological change of the value during a recording period for the value recorded in the recording means;
> selects a period, within the recording period, the period having a same trend as the trend of chronological change of the value during a corresponding period earlier than the object period to be predicted by a predetermined period when it is determined that a periodicity is absent;
> discriminates a period, from the selected period, a period to which the data for the plurality of items during the corresponding period belongs;
> selects a plurality of items on the basis of a factorial effect value derived from data for the plurality of items during the discriminated period and the value corresponding to a period that is a predetermined period later from the discriminated period; and
> calculates a prediction value during the object period to be predicted on the basis of data for the selected items during the corresponding period.

5. A computer program causing a computer, having a recording means, to read out values chronologically recorded in the recording means the values being relating to an event with which a plurality of factors are associated and data for each of a plurality of items recorded in the recording means as a plurality of factors associated with the values, to select a portion of items from the plurality of items on the basis of a factorial effect value indicating the strength of a correlation between the plurality of items and changes of the value, and to predict a value relating to the event during an object period to be predicted on the basis of the data of the selected portion of items, the computer program causing the computer to execute the functions of:

> a determination means for determining presence or absence of a periodicity in a trend of chronological change of the value during a recording period for the value recorded in the recording means;
> a selection means for selecting a period, within the recording period, the period having a same trend as the trend of chronological change of the value during a corresponding period earlier than the object period to be predicted by a predetermined period when the determination means determined there a periodicity is absent;
> a period discrimination means for discriminating a period, from the selected period by the selection means, the period to which the data for the plurality of items during the corresponding period belongs;
> an item selection means for selecting a plurality of items on the basis of a factorial effect value derived from data for the plurality of items during the discriminated period and the value corresponding to a period later than the the discriminated period by a predetermined period; and
> a prediction means for calculating a prediction value during the object period to be predicted on the basis of data for the items selected by the item selection means during the corresponding period.

FIG. 1

| MEMBER | ITEM 1 | ITEM 2 | · · · | ITEM k | SIGNAL VALUE |
|--------|--------|--------|-------|--------|--------------|
| 1 | $X_{11}$ | $X_{12}$ | · · · · | $X_{1k}$ | $M_1$ |
| 2 | $X_{21}$ | $X_{22}$ | · · · · | $X_{2k}$ | $M_2$ |
| · · · | · · · | · · · | · · · | · · · | · · · |
| $n$ | $X_{n1}$ | $X_{n2}$ | · · · · | $X_{nk}$ | $M_n$ |

## FIG. 2

| $\beta, \eta$ | ITEM 1 | ITEM 2 | · · · | ITEM k |
|---|---|---|---|---|
| PROPORTIONALITY CONSTANT $\beta$ | $\beta_1$ | $\beta_2$ | · · · | $\beta_k$ |
| SN RATIO ( THE SQUARE RATIO ) | $\eta_1$ | $\eta_2$ | · · · | $\eta_k$ |

# FIG. 3

| MEMBER | ACTUAL VALUE OF SIGNAL VALUE $M$ | COMPREHENSIVE ESTIMATED VALUE $\hat{M}$ |
|---|---|---|
| 1 | $M_1$ | $\hat{M}_1$ |
| 2 | $M_2$ | $\hat{M}_2$ |
| . . . | . . . | . . . |
| $n$ | $M_n$ | $\hat{M}_n$ |

EP 2 869 248 A1

FIG. 4

FIG. 5

## FIG. 6

NUMBER OF
THE ITEMS

(1)

(2)

SIGNAL
VALUE

A TIME
DIFFERENCE

PERIOD OF THE
PREDICTION
OBJECT

FIG. 7

ITEM 1

SIGNAL VALUE X

ITEM 1

SIGNAL VALUE X

FIG. 8

FACTORIAL EFFECT VALUE db

MAX

THE INITIAL VALUE

ITEM NUMBER

1 2 3 4 5 6 7 8 9 10 11 12 13 14 15 16 17 18 19 20 21 22 23 24 25 26 27 28 29 30 31 32 33 34 35 36

3 2 1 0 -1 -2

FIG. 9

EP 2 869 248 A1

## FIG. 10

| GENERATE TIME DIFFERENCE MODEL |
| --- |

| PERFORM LINEAR CONVERSION |
| --- |

| DERIVE THE FACTORIAL EFFECT VALUE |
| --- |

| SELECT SIGNAL PERIOD |
| --- |

| CALCULATE FOR EACH VALUE OF THE NUMBER OF ITEMS THE STRENGTH OF CORRELATION OF THE PREDICTION OBJECT |
| --- |

| DETERMINE THE NUMBER OF ITEMS |
| --- |

| SELECT ITEMS |
| --- |

| PREDICT VALUE OF PREDICTION OBJECT |
| --- |

1

PREDICTION DEVICE

10

| CONTROL SECTION |
| --- |

11

RECORDING SECTION

110

DB

2

PREDICTION PROGRAM

12

| TEMPORARY STORAGE SECTION |
| --- |

13

| INPUT SECTION |
| --- |

14

| OUTPUT SECTION |
| --- |

FIG. 11  PREDICTION DEVICE 1

```
                    ┌──────────┐
                    │  START   │
                    └──────────┘
                         │
        ┌────────────────────────────────┐
        │      RECORD THE DATA OF THE     │  S101
        │    PREDICTION OBJECT AND THE    │
        │        PLURALITY OF ITEMS       │
        └────────────────────────────────┘
                         │
        ┌────────────────────────────────┐
        │  GENERATE A TIME DIFFERENCE MODEL │  S102
        └────────────────────────────────┘
                         │
        ┌────────────────────────────────┐
        │     PERFORM LINEAR CONVERSION    │  S103
        └────────────────────────────────┘
                         │
        ┌────────────────────────────────┐
        │      SELECT THE SIGNAL PERIOD    │  S104
        └────────────────────────────────┘
                         │
        ┌────────────────────────────────┐
        │   CALCULATE THE PROPORTIONALITY  │  S105
        │     CONSTANT AND THE SN RATIO    │
        └────────────────────────────────┘
                         │
        ┌────────────────────────────────┐
        │   CALCULATE THE ESTIMATED VALUE  │  S106
        │      FOR THE PREDICTION OBJECT   │
        └────────────────────────────────┘
                         │
        ┌────────────────────────────────┐
        │     CALCULATE THE COMPREHENSIVE  │  S107
        │          ESTIMATED VALUE         │
        └────────────────────────────────┘
                         │
        ┌────────────────────────────────┐
        │    CALCULATE THE SN RATIO OF THE │  S108
        │    COMPREHENSIVE ESTIMATED VALUE │
        └────────────────────────────────┘
                         │
        ┌────────────────────────────────┐
        │  DERIVE THE FACTORIAL EFFECT VALUE │  S109
        └────────────────────────────────┘
                         │
        ┌────────────────────────────────┐
        │  CALCULATE FOR EACH VALUE OF THE │  S110
        │    NUMBER OF ITEMS THE SN RATIO  │
        │      OF THE COMPREHENSIVE        │
        │          ESTIMATED VALUE         │
        └────────────────────────────────┘
                         │
        ┌────────────────────────────────┐
        │   DETERMINE THE NUMBER OF ITEMS  │  S111
        └────────────────────────────────┘
                         │
        ┌────────────────────────────────┐
        │           SELECT ITEMS          │  S112
        └────────────────────────────────┘
                         │
        ┌────────────────────────────────┐
        │    CALCULATE A PREDICTION VALUE  │  S113
        └────────────────────────────────┘
                         │
                    ┌──────────┐
                    │   END    │
                    └──────────┘
```

FIG. 12

```
                    ( START )
                         |
                         ▼  S401
          ┌─────────────────────────────┐
          │    PERFORM A CONVERSION      │
          │      FOR SIGNAL VALUES       │
          └─────────────────────────────┘
                         |
                         ▼  S402
                   ╱────────────╲
                  ╱ A PERIODICITY ╲
                 ╱ IN THE TRANSFER OF THE ╲   NO
                 ╲  SIGNAL VALUES  ╱──────────┐
                  ╲ IS PRESENT ?  ╱           │
                   ╲────────────╱             │
                      │ YES                   │
                      ▼  S403                 ▼  S411
       ┌──────────────────────────┐  ┌──────────────────────────┐
       │ CALCULATE THE SIGNAL TREND│  │ CALCULATE THE SIGNAL TREND│
       └──────────────────────────┘  └──────────────────────────┘
                      │  S404                 │  S412
       ┌──────────────────────────┐  ┌──────────────────────────┐
       │     SPECIFY THE TREND     │  │     SPECIFY THE TREND     │
       │  OF SIGNAL VALUES DURING  │  │  OF SIGNAL VALUES DURING  │
       │   CORRESPONDING PERIOD    │  │   CORRESPONDING PERIOD    │
       └──────────────────────────┘  └──────────────────────────┘
                      │  S405                 │  S413
       ┌──────────────────────────┐  ┌──────────────────────────┐
       │ SELECT SIGNAL VALUES AND DATA│  │   SELECT SECTION HAVING   │
       │ FOR EACH ITEM DURING SECTION │  │     SPECIFIED TREND      │
       │    CORRESPONDING TO       │  └──────────────────────────┘
       │    SPECIFIED TREND        │             │  S414
       └──────────────────────────┘  ┌──────────────────────────┐
                      │  S406         │ CALCULATE MD AND MD TREND │
       ┌──────────────────────────┐  │ OF DATA FOR EACH ITEMS DURING│
       │  CALCULATE MD OF THE DATA │  │     SELECTED SECTION      │
       │    FOR ITEMS SELECTED     │  └──────────────────────────┘
       └──────────────────────────┘             │
                      │  S407                    ▼  S415
       ┌──────────────────────────┐        ╱────────────╲
       │   CALCULATE TREND OF MD   │       ╱   MD TREND OF  ╲
       └──────────────────────────┘      ╱  THE SELECTED    ╲   NO
                      │  S408           ╲ SECTION IS EQUAL TO ╱──────┐
       ┌──────────────────────────┐     ╲ A PREDETERMINED VALUE╱     │
       │ SELECT SECTION CLOSE TO THE│     ╲  OR SMALLER ?  ╱         │
       │  PERIOD TO BE PREDICTED IN │      ╲────────────╱            │
       │  SEQUENCE AMONG SECTIONS   │          │ YES                 │
       │ CORRESPONDING TO SELECTED  │          ▼  S416               │
       │   SIGNAL VALUES AND DATA   │  ┌──────────────────────────┐  │
       └──────────────────────────┘  │   SELECT SECTION HAVING   │  │
                      │               │   MD TREND BEING EQUAL    │  │
                      ▼  S409         │ TO THE PREDETERMINED VALUE │  │
                ╱────────────╲        │ OR SMALLER AS SIGNAL SECTION│  │
               ╱  MD TREND     ╲      └──────────────────────────┘  │
              ╱  THROUGHOUT     ╲              │                     │
     YES ╱ THE ENTIRETY OF THE SELECTED ╲      │                     ▼  S417
     ┌──╲ SECTION IS GREATER THAN ╱       │          ┌──────────────────────────┐
     │   ╲ A PREDETERMINED ╱               │          │   SELECT SECTION HAVING   │
     │    ╲   VALUE ?  ╱                   │          │ MD TREND BEING GREATER    │
     │     ╲────────╱                      │          │ THAN THE PREDETERMINED    │
     │        │ NO   S410                  │          │  VALUE AS SIGNAL SECTION  │
     │  ┌──────────────────────────┐       │          └──────────────────────────┘
     │  │  SELECT A SECTION HAVING  │       │                     │
     │  │  LENGTH OF THE PERIOD     │       │                     │
     │  │  TO BE PREDICTED WITHIN   │       │                     │
     │  │    SELECTED SECTION       │       │                     │
     │  └──────────────────────────┘       │                     │
     │              │                       │                     │
     │              ▼◄──────────────────────┘◄────────────────────┘
     │          ( END )
```

FIG. 13

| Name of Items |
| --- |
| January |
| February |
| March |
| April |
| May |
| June |
| July |
| August |
| September |
| October |
| November |
| December |
| . . . |
| Japan unemployment rate (%) |
| Domestic bank lending rate (%) |
| Japan manufacturing orders (1 billion yen) |
| Japan gas oil price (yen/liter) amount (1 billion yen) |
| At the end Nikkei Stock Average |
| Exchange rate (end of the month, against the U.S.dollar ) |
| Japan export amount (one billion yen) |
| CI Leading Index |
| CI Coincident Index |
| CI Lagging Index |
| DI Leading Index |
| DI Coincident Index |
| DI Lagging Index |
| DI Cumulated Leading Index |
| DI Cumulated Coincident Index |
| DI Cumulated Lagging Index |
| Japan starts new housing number |
| Japan construction orders ( one billion yen ) |
| . . . |
| Japan export  marine container |
| Japan company bankruptcies |
| Japan ordinary vehicles new car sales ( units ) |
| Japan truck new vehicle sales ( units ) |

FIG. 14

FIG. 15

FIG. 16

EP 2 869 248 A1

FIG. 17

EP 2 869 248 A1

FIG. 18

TREND
(—:NEGATIVE)
SIGNAL SECTION

October 1st 2009

October 1st 2008

October 1st 2007

October 1st 2006

October 1st 2005

October 1st 2004

October 1st 2003

October 1st 2002

October 1st 2001

October 1st 2000

NUMBER OF SHIPMENTS

FIG. 19

FIG. 20

FIG. 21

FIG. 22

**FIG. 23**

TREND (+ :POSITIVE)
SIGNAL SECTION

NUMBER OF SHIPMENTS

October 1st 2010
October 1st 2009
October 1st 2008
October 1st 2007
October 1st 2006
October 1st 2005
October 1st 2004
October 1st 2003
October 1st 2002
October 1st 2001
October 1st 2000

FIG. 24

FIG. 25

**INTERNATIONAL SEARCH REPORT**

| International application No. |
|---|
| PCT/JP2013/067311 |

**A. CLASSIFICATION OF SUBJECT MATTER**
*G06Q10/04(2012.01)i*

According to International Patent Classification (IPC) or to both national classification and IPC

**B. FIELDS SEARCHED**

Minimum documentation searched (classification system followed by classification symbols)
G06Q10/04

Documentation searched other than minimum documentation to the extent that such documents are included in the fields searched
Jitsuyo Shinan Koho          1922-1996   Jitsuyo Shinan Toroku Koho   1996-2013
Kokai Jitsuyo Shinan Koho    1971-2013   Toroku Jitsuyo Shinan Koho   1994-2013

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2010-176418 A (Mitsubishi Electric Corp.), 12 August 2010 (12.08.2010), entire text; all drawings (Family: none) | 1-5 |
| A | JP 2007-141036 A (Ricoh Co., Ltd.), 07 June 2007 (07.06.2007), entire text; all drawings & US 2007/0118421 A1 | 1-5 |
| A | JP 2001-22729 A (Hitachi, Ltd.), 26 January 2001 (26.01.2001), entire text; all drawings (Family: none) | 1-5 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 22 July, 2013 (22.07.13) | 30 July, 2013 (30.07.13) |

| Name and mailing address of the ISA/ Japanese Patent Office | Authorized officer |
|---|---|
| Facsimile No. | Telephone No. |

Form PCT/ISA/210 (second sheet) (July 2009)

**INTERNATIONAL SEARCH REPORT**

International application No.

PCT/JP2013/067311

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2010-211684 A  (Toshiba Corp.), 24 September 2010 (24.09.2010), entire text; all drawings (Family: none) | 1-5 |
| A | Kazuo TATEBAYASHI, Nyumon MT System, 1st edition, JUSE Press, Ltd., 04 December 2008 (04.12.2008), pages 58 to 65, 73 to 90 | 1-5 |
| A | Kishio TAMURA, Yokuwakaru MT System, 1st edition, Japanese Standards Association, 25 August 2009 (25.08.2009), pages 103 to 110, 116 to 118 | 1-5 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 3141164 B

**Non-patent literature cited in the description**

• MT System for Beginners. Nikkagiren Publishing Co. Ltd, December 2006

• **YUKIYA MASUDA.** Study of T-Method to mitigate NonLinear Phenomena. *17th Conference of Quality Engineering Studies, Article Collection,* 2009, 422-425